(19)

Europäisches
Patentamt
European
Patent Office
Office européen
des brevets

(11) **EP 2 040 478 A2**

(12) **EUROPEAN PATENT APPLICATION**

(43) Date of publication:
**25.03.2009  Bulletin 2009/13**

(51) Int Cl.:
**H04N 13/00** $^{(2006.01)}$

(21) Application number: **08016268.8**

(22) Date of filing: **16.09.2008**

| | |
|---|---|
| (84) Designated Contracting States:<br>**AT BE BG CH CY CZ DE DK EE ES FI FR GB GR HR HU IE IS IT LI LT LU LV MC MT NL NO PL PT RO SE SI SK TR**<br>Designated Extension States:<br>**AL BA MK RS** | (72) Inventors:<br>• **Fukushima, Rieko**<br>  **Minato-ku,**<br>  **Tokyo 105-8001 (JP)**<br>• **Hirayama, Yuzo**<br>  **Minato-ku,**<br>  **Tokyo 105-8001 (JP)** |
| (30) Priority: **21.09.2007  JP 2007245258** | (74) Representative: **HOFFMANN EITLE**<br>**Patent- und Rechtsanwälte**<br>**Arabellastraße 4**<br>**81925 München (DE)** |
| (71) Applicant: **Kabushiki Kaisha Toshiba**<br>**Minato-ku,**<br>**Tokyo 105-8001 (JP)** | |

(54) **Apparatus, method, and computer program product for processing three-dimensional images**

(57)    An element image array (41) for displaying a three-dimensional image is generated by assigning the parallax images (45) that are contained in multi-viewpoint information obtained under an arbitrary condition to the pixels included in a display panel (31) so that parallax information derived from multi-viewpoint images is assigned to the pixels, based on the incident positions of the optical beams emitted from the pixels and the image obtaining positions (43) of the multi-viewpoint images, while the number of pixels forming each element image is adjusted so that the optical beams become incident substantially in mutually the same area at a first viewing distance.

**Description**

CROSS-REFERENCE TO RELATED APPLICATIONS

This application is based upon and claims the benefit of priority from the prior Japanese Patent Application No. 2007-245258, filed on Sep. 21, 2007; the entire contents of which are incorporated herein by reference.

BACKGROUND OF THE INVENTION

1. Field of the Invention

The present invention relates to an apparatus, a method, and a computer program product for processing three-dimensional images to generate element image arrays that are used for displaying the three-dimensional images.

2. Description of the Related Art

As for the display methods employed by three-dimensional image displaying apparatuses that use a plurality of multi-viewpoint images obtained from a plurality of mutually different viewpoint positions with respect to a projection plane containing a gazing point, various types of display methods as the following are conventionally known: the multi-view method, the dense multi-view method, the integral imaging method (hereinafter, "the II method"), and the one-dimensional II method (hereinafter, "the 1D-II method": parallax images are displayed only in the horizontal direction). These display methods have a characteristic in common where the quality of the three-dimensional image is improved as the number of parallax images (i.e., the number of viewpoints) increases, although the load for obtaining the multi-viewpoint images from which the parallax images are derived also increases. When the projection planes for the plurality of multi-viewpoint images are configured so as to be the same as one another, the display surface is used as mutually the same projection plane. The parallax images that constitute an element image for an exit pupil is obtained by extracting pixel information that corresponds to the coordinates of the exit pupil.

For each of the various types of display methods mentioned above, the number of viewpoints, the value of the intervals at which the parallax images are presented, and the relationship between the optical beams vary. Thus, to display a three-dimensional image properly, even if the projection plane containing the gazing point is the same, it is necessary to obtain multi-viewpoint images from different viewpoints depending on the display method being used. Conversely, in the case where multi-viewpoint images that are obtained by mutually different display methods are used together, a problem arises where the displayed three-dimensional image has an error so that the quality of the three-dimensional image is degraded. Consequently, although the load for obtaining the multi-viewpoint images is large, the versatility of the obtained multi-viewpoint images is low.

To cope with this situation, various techniques for improving compatibility among display methods have conventionally been proposed. For example, JP-A H09-9143 (KOKAI), discloses a technique for, in the case where the number of viewpoints is smaller than a desired value, performing an interpolation process by generating images corresponding to positions between the viewpoints. Also, JP-A 2005-331844 (KOKAI), discloses a technique for interpolating the number of viewpoints by assigning a plurality of parallax images out of the viewpoint images that have been obtained from mutually the same viewpoint position to a plurality of pixel arrays that are positioned adjacent to one another.

Further, a technique called "ray-space" is known as a method for treating pieces of multi-viewpoint information based on mutually different display methods in a unified manner (see, for example, Masayuki Tanimoto, FTV [Free Viewpoint Television]: Opening a New Paradigm of Visual Systems, Journal of The Institute of Electronics, Information and Communication Engineers [IEICE] 89(10), 866 (2006)). By using this technique, it is possible to generate, from a ray-space, multi-viewpoint information that is compatible with an arbitrary three-dimensional image displaying apparatus. For example, from a ray-space that has been generated from multi-viewpoint information corresponding to one hundred viewpoint positions, it is possible to generate multi-viewpoint information obtained from an arbitrary position. In other words, once the ray-space has been generated, it is possible to generate multi-viewpoint information that is compatible with an arbitrary display method.

However, the technique disclosed in JP-A H09-9143 (KOKAI), has a problem where, to improve the level of accuracy of the three-dimensional image, the amount of calculation in the interpolation process increases. In addition, even if the amount of calculation is increased, the level of precision in the parallax images that are generated by performing the interpolation process on an insufficient amount of information (i.e., the level of accuracy of the three-dimensional image) falls short of the level of accuracy of a three-dimensional image generated from proper parallax images.

Further, the technique disclosed in JP-A 2005-331844 (KOKAI), has a problem where degradation of the image quality is inevitable (e.g., the displayed three-dimensional image is inaccurate) because the viewpoint images in the interpolated parts are not based on proper information. On the other hand, although the technique disclosed by Masayuki Tanimoto makes it possible to generate arbitrary multi-viewpoint information from the plurality of pieces of multi-viewpoint information that have been generated in advance, it has a problem where the load for generating the ray-space is large.

SUMMARY OF THE INVENTION

According to one aspect of the present invention, a three-dimensional image processing apparatus includes a storage unit that stores specification information defining specifications related to a display panel and an optical beam controlling unit, the display panel including pixels each of which has a predetermined width and arranged in a matrix and displaying element images used for displaying a three-dimensional image, and the optical beam controlling unit being disposed in front of the display panel and controlling directions in which optical beams are emitted from the pixels by using exit pupils that are arranged with a pitch width obtained by multiplying the predetermined width approximately by an integer so that the element images respectively corresponding to the exit pupils are emitted toward an area positioned a predetermined distance away from the display panel; a receiving unit that receives multi-viewpoint images containing a plurality of parallax images that are respectively obtained from mutually different viewpoint positions; a number of pixels determining unit that, based on the specification information, determines the number of pixels corresponding to each of the element images in order for directions of optical beams to become incident substantially in a mutually same area that is positioned a first viewing distance away from the optical beam controlling unit, the optical beams each connecting a center of the set of pixels to a center of one of the exit pupils corresponding to the one of the element images; an obtaining position specifying unit that, based on the specification information, specifies image obtaining positions in which the multi-viewpoint images are obtained, on a plane that is positioned a second viewing distance away from the optical beam controlling unit; an incident position calculating unit that calculates incident positions in which the optical beams that are emitted through the exit pupils from the pixels corresponding to the element images become incident on the plane at the second viewing distance; an obtaining position identifying unit that, for each of the incident positions, identifies one of the image obtaining positions that is positioned closest to the incident position; and a generating unit that generates an element image array by assigning the parallax images extracted from the multi-viewpoint images corresponding to the image obtaining positions identified by the obtaining position identifying unit, to the pixels from which the optical beams corresponding to the incident positions are emitted, respectively.

According to another aspect of the present invention, a three-dimensional image processing method includes receiving a plurality of multi-viewpoint images respectively obtained from mutually different viewpoint positions; determining a number of pixels corresponding to each of the element images, based on specification information, in order for directions of optical beams to become incident substantially in a mutually same area that is positioned a first viewing distance away from the optical beam controlling unit, the optical beams each connecting a center of the set of pixels to a center of one of the exit pupils corresponding to the one of the element images, the specification information defining specifications related to a display panel and an optical beam controlling unit, the display panel including pixels each of which has a predetermined width and arranged in a matrix and displaying element images used for displaying a three-dimensional image, and the optical beam controlling unit being disposed in front of the display panel and controlling directions in which optical beams are emitted from the pixels by using exit pupils that are arranged with a pitch width obtained by multiplying the predetermined width approximately by an integer so that the element images respectively corresponding to the exit pupils are emitted toward an area positioned a predetermined distance away from the display panel; specifying, based on the specification information, image obtaining positions in which the multi-viewpoint images are obtained, on a plane that is positioned a second viewing distance away from the optical beam controlling unit; calculating incident positions in which the optical beams that are emitted, through the exit pupils, from the pixels corresponding to the element images become incident on the plane at the second viewing distance; identifying, for each of the incident positions, one of the image obtaining positions that is positioned closest to the incident position; and generating an element image array by assigning the parallax images extracted from the multi-viewpoint images corresponding to the image obtaining positions identified by the obtaining position identifying unit, to the pixels from which the optical beams corresponding to the incident positions are emitted, respectively.

A computer program product according to still another aspect of the present invention causes a computer to perform the method according to the present invention.

BRIEF DESCRIPTION OF THE DRAWINGS

Fig. 1 is a diagram of a three-dimensional image displaying apparatus;
Fig. 2 is a drawing of the structure of the displaying unit included in the three-dimensional image displaying apparatus shown in Fig. 1;
Fig. 3A is a horizontal cross-sectional view of the displaying unit shown in Fig. 2;

Fig. 3B is an enlarged view of an element image 33L shown in the leftmost part of Fig. 3A;
Fig. 4A is another horizontal cross-sectional view of the displaying unit shown in Fig. 2;
Fig. 4B is an enlarged view of the element image 33L shown in the leftmost part of Fig. 4A;
Fig. 5 is a schematic drawing of an example of relationships between multi-viewpoint image obtaining positions and parallax images;
Fig. 6 is a schematic drawing of another example of relationships between multi-viewpoint image obtaining positions and parallax images;
Fig. 7 is a drawing for explaining relationships between element images, parallax images, and exit pupils;
Fig. 8A is a drawing for explaining how an element image array is viewed according to the 1D-II method;
Fig. 8B is another drawing for explaining how the element image array is viewed according to the 1D-II method;
Fig. 8C is yet another drawing for explaining how the element image array is viewed according to the 1D-II method;
Fig. 8D is yet another drawing for explaining how the element image array is viewed according to the 1D-II method;
Fig. 9 is a functional diagram of a three-dimensional image displaying apparatus;
Fig. 10 is yet another horizontal cross-sectional view of the displaying unit shown in Fig. 2;
Fig. 11 is a drawing for explaining relationships between a projection plane and the viewpoint numbers of multi-viewpoint image obtaining positions;
Fig. 12 is yet another horizontal cross-sectional view of the displaying unit shown in Fig. 2;
Fig. 13 is another drawing for explaining the relationships between a projection plane and the viewpoint numbers of multi-viewpoint image obtaining positions;
Fig. 14 is yet another drawing for explaining the relationships between a projection plane and the viewpoint numbers of multi-viewpoint image obtaining positions;
Fig. 15 is yet another drawing for explaining the relationships between a projection plane and the viewpoint numbers of multi-viewpoint image obtaining positions;
Fig. 16 is yet another drawing for explaining the relationships between a projection plane and the viewpoint numbers of multi-viewpoint image obtaining positions;
Fig. 17 is yet another horizontal cross-sectional view of the displaying unit shown in Fig. 2;
Figs. 18A and 18B are flowcharts of a procedure in an element image array generating process;
Fig. 19 is a drawing for explaining how an element image array generated in the element image array generating process is displayed; and
Fig. 20 is another drawing for explaining how an element image array generated in the element image array generating process is displayed.

DETAILED DESCRIPTION OF THE INVENTION

Exemplary embodiments of an apparatus, a method, and a computer program product for processing three-dimensional images according to the present invention will be explained in detail, with reference to the accompanying drawings.

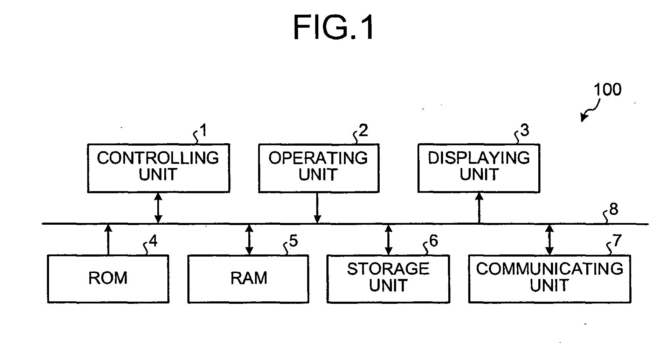

Fig. 1 is a block diagram of a hardware configuration of a three-dimensional image displaying apparatus 100 according to an embodiment of the present invention. As shown in Fig. 1, the three-dimensional image displaying apparatus 1 includes a controlling unit 1, an operating unit 2, a displaying unit 3, a Read-Only Memory (ROM) 4, a Random Access Memory (RAM) 5, a storage unit 6, and a communicating unit 7. These constituent elements are connected to one another via a bus 8.

The controlling unit 1 is configured with a computing device such as a Central Processing Unit (CPU) or a Graphics Processing Unit (GPU). The controlling unit 1 performs various types of processes in collaboration with various types of controlling programs that are stored, in advance, in the ROM 4 or the storage unit 6, while using a predetermined area in the RAM 5 as a working area. The controlling unit 1 controls the operations of the constituent elements of the three-dimensional image displaying apparatus 100 in an integrated manner. Also, the controlling unit 1 realizes the functions of the functional units that are explained later (i.e., a multi-viewpoint information receiving unit 11; a specification information obtaining unit 12; an element-image-array generating unit 13; and a display controlling unit 14) in collaboration with a predetermined program that is stored in advance in the ROM 4 or the storage unit 6.

The operating unit 2 is an input device such as a mouse and/or a keyboard. The operating unit 2 receives information that has been input through a user operation as an instruction signal and outputs the instruction signal to the controlling unit 1.

The displaying unit 3 includes a flat panel display (FPD) (e.g., a liquid crystal display device) and an optical beam controlling element such as a lenticular lens. The configuration of the displaying unit 3 will be explained in detail later.

The RAM 5 is a volatile storage device such as a Synchronous Dynamic Random Access Memory (SDRAM) and functions as a working area and a video memory for the controlling unit 1. More specifically, the RAM 5 serves as a buffer that temporarily stores therein various types of variables and parameter values during a process related to generation of an element image array, which is explained later.

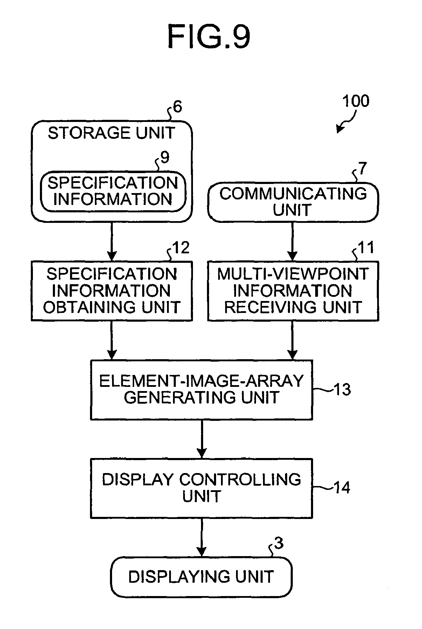

The storage unit 6 includes a storage medium that is capable of recording data therein magnetically or optically. The storage unit 6 stores therein, in a rewritable manner, programs and various types of information that are related to the controlling of the three-dimensional image displaying apparatus 100. Also, the storage unit 6 stores therein specification information 9 (explained later; see Fig. 9) that is related to the specification of the displaying unit 3.

The communicating unit 7 is an interface that performs communication with external devices. The communicating unit 7 outputs various types of information that it has received to the controlling unit 1 and also transmits various types of information that have been output by the controlling unit 1 to external devices.

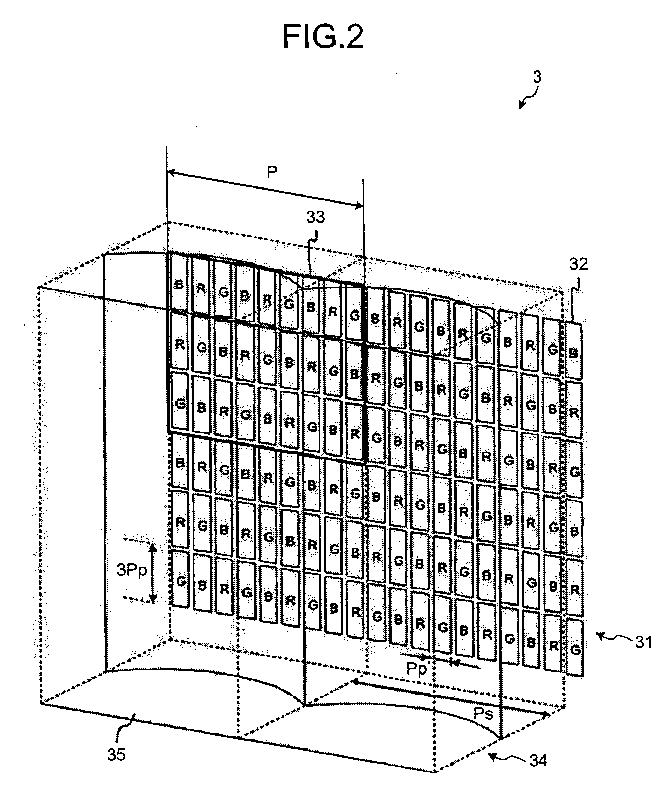

Next, a configuration of the displaying unit 3 will be explained in detail, with reference to Fig. 2. Fig. 2 is a schematic perspective view for explaining the configuration of the displaying unit 3. In Fig. 2, an example of the configuration in which the number of viewpoints "n" is 9 is shown.

As shown in Fig. 2, the displaying unit 3 includes an FPD 31 in which sub-pixels 32 are arranged in a matrix formation and a lenticular plate 34 that serves as the optical beam controlling element disposed in front of the display surface of the FPD 31. The viewer of the displaying unit 3 is able to visually perceive a three-dimensional image, because the pixels that are viewable through the exit pupils included in the optical beam controlling element change depending on the viewing position, due to an optical function of the optical beam controlling element. More specifically, each of the exit pupils corresponds to one pixel in the displaying unit 3. As a result, the resolution of the displaying unit 3 is lower than the resolution of the FPD 31 itself.

It has been known that presenting parallax images only in the horizontal direction is effective in inhibiting the degradation of the resolution. Accordingly, the lens component of the cylindrical lenses 35 included in the lenticular plate 34 is only a horizontal component. In Fig. 2, an example of the configuration is shown in which the optical openings of the cylindrical lenses 35 are arranged in series in the vertical direction; however, another configuration is acceptable in which the cylindrical lenses 35 are positioned diagonally. In the following sections, the present embodiment will be explained on the assumption that the parallax images are presented only in the horizontal direction.

On the display surface of the FPD 31, the sub-pixels 32 in each of the columns extending in the vertical direction are arranged in such a manner that a set of sub-pixels corresponding to the colors of red (R), green (G), and blue (B) repeatedly appears in the column, so that the sub-pixels that are enlarged by each lens do not correspond to mutually the same color. By using such a color arrangement of the sub-pixels, it is possible to configure each of the parallax images that are viewed from a viewing position via the cylindrical lenses 35 with the colors of R, G, and B. Also, the sub-pixels 32 are linearly arranged in a row in the horizontal direction. Again, the sub-pixels 32 are arranged in such a manner that a set of sub-pixels corresponding to the colors of R, G, and B repeatedly appears in each of the rows. However, the present invention is not limited to this example. Another arrangement is acceptable in which sub-pixels corresponding to mutually the same color are arranged in each of the rows.

In a commonly-used color image displaying apparatus, a set of three sub-pixels 32 corresponding to the colors of R, G, and B that are arranged in the row direction constitutes one effective pixel, which is a minimum unit for which it is possible to arbitrarily set the luminance and the color. Thus, each of the sub-pixels has the length-to-width ratio of 3:1 (where the length is expressed as 3Pp, and the width is expressed as Pp). In the present embodiment, the example in which the length-to-width ratio of each of the sub-pixels is 3:1 is used; however, the length-to-width ratio is not limited to this example. Hereinafter, the width Pp of each of the sub-pixels 32 will be referred to as a "pixel pitch".

On the display surface shown in Fig. 2, an effective pixel is formed by a set of three sub-pixels 32 corresponding to R, G, and B that are arranged in the column direction. An element image 33 (marked with a bold frame), which is a set of parallax images corresponding to one cylindrical lens 35, is displayed by nine columns of effective pixels that are arranged in the row direction.

Each of the cylindrical lenses 35 that are included in the lenticular plate 34 is disposed substantially to the front of the element images 33. With this arrangement, the effective pixels that are viewed in an enlarged manner through the exit pupils corresponding to the pixels in the displaying unit 3 (i.e., through the cylindrical lenses 35) change, while the viewing position in the horizontal direction changes. In the present example, using nine parallaxes makes each of the pixels in the displaying unit 3 a square because the length-to-width ratio of each of the sub-pixels 32 is 3:1.

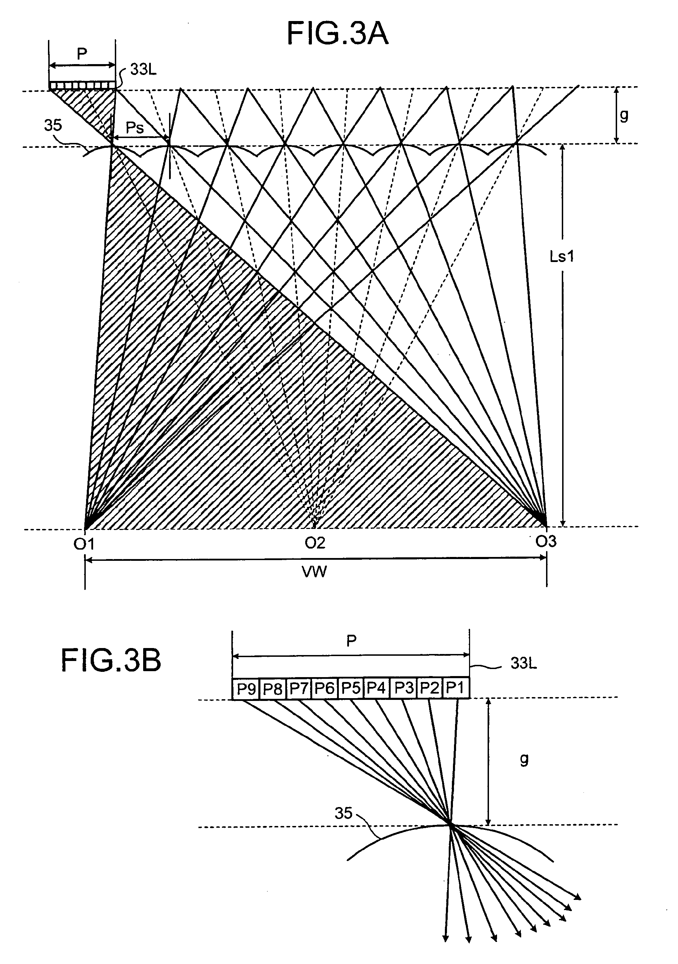

Even when the 1D-II method or the multi-view method is used, the basic configuration of the displaying unit 3 is the same as the example shown in Fig. 2. The viewer is able to visually perceive a three-dimensional image because the parallax images 33 (each being a constituent element of the element image that corresponds to one exit pupil) displayed by the effective pixels viewed through the exit pupils change, depending on the viewing position. In this situation, the element image width P of each of the element images 33 behind the cylindrical lenses 35 is finite. Thus, an area in which the three-dimensional image is viewable (hereinafter "viewing area") is also limited. In the following sections, the relationships between the width of each of the element images 33 and the viewing area will be explained, with reference to Figs. 3A and 3B.

Fig. 3A is a horizontal cross-sectional view of the displaying unit 3. Fig. 3B is an enlarged view of an element image 33L in the leftmost part of FPD 31 shown in Fig. 3A. In Figs. 3A and 3B, the reference character "P" denotes the width (i.e., the span in the row direction) of the element image. The reference character "g" denotes the distance between the lens in the lenticular plate 34 and the element image 33 (hereinafter, a "lens-pixel distance"). The reference character "Ls1" denotes the distance between the viewing position of the viewer and the lenticular plate 34 (hereinafter, a "viewing distance") and corresponds to a viewing area optimizing distance (which is explained later). In Fig. 3A, the viewing area formed by the element image 33L is indicated by shading.

As shown in Fig. 3A, when the viewing position of the viewer moves in the horizontal direction from O1 to O2, and from 02 to 03, the viewer sequentially sees the display-purpose optical beams emitted from the sub-pixels (i.e., the effective pixels) P1 to P9 in turn through the cylindrical lens 35, as shown in Fig. 3B, according to the movement of the viewing position. In Fig. 3B, each of the arrows indicates the principal direction in which the corresponding one of the effective pixels is viewed through the cylindrical lens 35. In actuality, the range in which each effective pixel is viewable extends on either side of the principal direction because each pixel has a width that is finite and also because of influence of defocusing of each of the lenses.

With respect to an element image, when the width of the viewing area (hereinafter "viewing area width") in which a three-dimensional image is viewable at the viewing distance Ls1 is expressed as "VW", because the viewing area width VW has a relationship as expressed in Expression (1) below, it is possible to express "VW" by using Expression (2).

$$VW:(Pp \times n)=Ls1:g \qquad (1)$$

$$VW=((Pp \times n) \times Ls1)/g \qquad (2)$$

As understood from Expression (2) above, if the pixel pitch Pp and the number of viewpoints n are constant, it is possible to make the viewing area width VW larger by making the value of the lens-pixel distance g smaller. It should be noted, however, that the level of display performance in the depth direction is degraded in this situation because the intervals between the optical beams presenting the parallax images become larger.

As explained above, the area in which the three-dimensional image is viewable is closely related to the specifications and the restrictions associated with the hardware of the displaying unit 3. Thus, to maximize the area in which the three-dimensional image is viewable while the viewing distance is finite, it is necessary to have an arrangement in which the ranges (each represented by the viewing area width VW defined in Expression (1) above) within which the element image is viewable through the cylindrical lens 35 mutually match for all the cylindrical lenses 35 at the viewing distance Ls1.

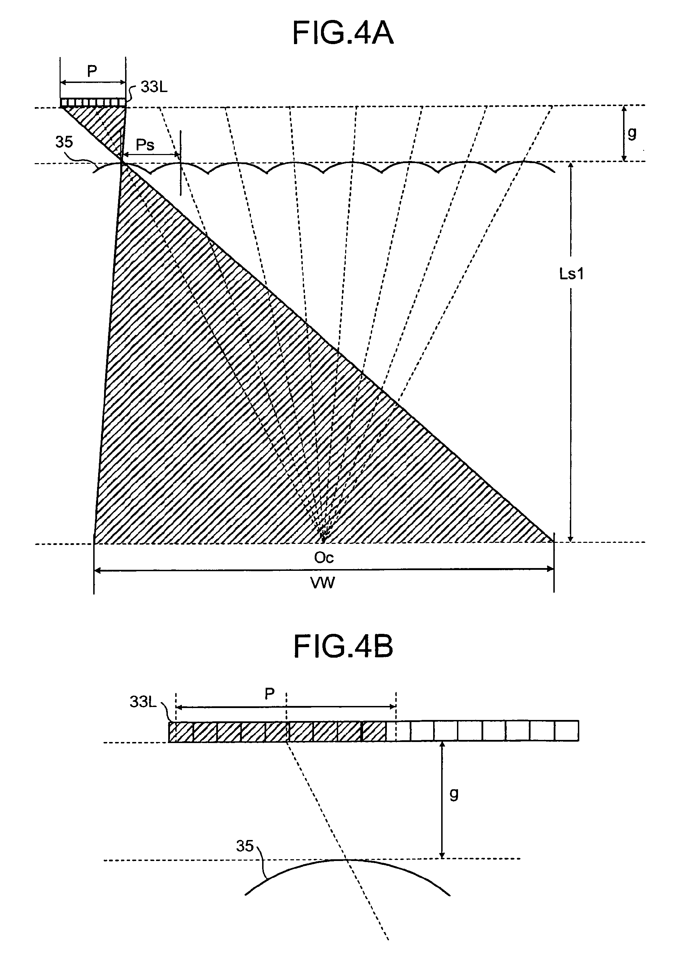

Next, a procedure for making the arrangement in which the viewing area widths VW mutually match at the viewing distance Ls1 will be explained, with reference to Figs. 4A and 4B. Fig. 4A is a horizontal cross-sectional view of the displaying unit 3. Fig. 4B is an enlarged view of the element image 33L in the leftmost part of the FPD 31 shown in Fig. 4A. In Fig. 4B, the element image width and the sub-pixels that display the element image are shown.

To make the arrangement in which the viewing area widths VW mutually match at the viewing distance Ls1, as shown in Figs. 4A and 4B, it is necessary to have an arrangement in which the straight lines each of which connects the center of a different one of the element images 33 to the center of the corresponding one of the cylindrical lenses 35 (i.e., the exit pupil) intersect one another at the viewing distance Ls1. To have this arrangement, it is necessary that the horizontal pitch Ps of the cylindrical lenses 35 and the element image width P satisfy the relationship expressed in Expression (3) below. Further, Expression (3) may be modified as shown in Expression (4) below.

$$Ls1:(Ls1+g)=Ps:P \qquad (3)$$

$$Ps=P \times Ls1/(Ls1+g) \qquad (4)$$

To satisfy the relationship expressed in Expression (4), it is necessary to configure the displaying unit 3 that uses the multi-view method so that the horizontal pitch Pp of the cylindrical lenses 35 is Ls/(Ls1+g) times shorter than the value obtained by multiplying the row-direction cycle of the sub-pixels 32 arranged on the display surface (i.e., the pixel pitch Pp) by the number of viewpoints n. By generalizing this relationship, it is possible to express the horizontal pitch Ps of the cylindrical lenses 35 as shown in Expression (5) below.

$$Ps=(n×Pp)×Ls1/(Ls1+g) \qquad (5)$$

Accordingly, each of the element images according to the multi-view method is always formed by as many pixels as n corresponding to the number of viewpoints n. Also, the optical beams emitted from every n'th sub-pixel in the horizontal direction form a converging point at the viewing distance Ls1.

Further, when the 1D-II method is used, no converging point should be formed at the viewing distance Ls1. Accordingly, it is necessary to have an arrangement in which, for example, the horizontal pitch Ps of the cylindrical lenses is equal to the value obtained by multiplying the pixel pitch Pp of the sub-pixels 32 arranged on the display surface by the number of viewpoints n. In other words, the horizontal pitch Ps of the cylindrical lenses is configured so as to satisfy Expression (6) below.

$$Ps=n×Pp \qquad (6)$$

When Expression (6) is satisfied, the optical beams emitted from every n'th sub-pixel 32 in the horizontal direction form parallel optical beams. In this hardware configuration, to maintain the viewing area at the viewing distance Ls1 (i.e., to satisfy Expression (4)), it is necessary to have an arrangement in which first element images are each formed by as many sub-pixels as n, while second element images that are each formed by as many sub-pixels as (n+1) are discretely distributed among the first element images.

In this situation, when the ratio defining how many of the element images are each formed by as many sub-pixels as (n+1) is expressed as "m", it is possible to express the element image width P by using Expression (7) below.

$$P=\{(1-m)×n+m×(n+1)\}×Pp \qquad (7)$$

Further, from Expression (7) above, it is possible to obtain Expression (8) below, based on Expressions (4) and (6). By determining the ratio m so that Expression (8) is satisfied, it is possible to satisfy Expression (4) while preventing the converging point from being formed at the viewing distance.

$$Ps/P=n/\{(1-m)×n+m×(n+1)\}=Ls1/(Ls1+g) \qquad (8)$$

It is understood from Expression (8) that it is possible to make the viewing distance Ls1 that maximizes the viewing area width longer by making the ratio m smaller. Also, it is understood that it is possible to make the viewing distance Ls1 shorter by making the ratio m larger. In the description of the present embodiment presented in the following sections, the process of determining the number of pixels that form each of the element images in such a manner that the second element images that are each formed by as many sub-pixels as (n+1) are discretely distributed among the first element images at the ratio of m derived from Expression (8) above, so that the viewing area widths VW substantially match at the viewing distance Ls1 will be referred to as a "viewing area optimization process". In addition, the viewing distance Ls1 in this situation will be referred to as a "viewing area optimizing distance".

It is possible to determine the positions in which the second element images that are each formed by as many sub-pixels as (n+1) should be disposed by repeating a process of comparing the center of the set of sub-pixels with the boundaries obtained by defining the element image width P so as to be centered on a straight line L1 extending from the center Oc of the viewing area at the viewing distance Ls1 to the center of the corresponding one of the exit pupils and judging whether the element image should be the first element image or the second element image.

For example, on the assumption that n=9 is satisfied, the number of sub-pixels 32 that allows the center of the set of pixels to be positioned on the inside of the boundaries (i.e., the left end and the right end) obtained by defining the element image width P so as to be centered on the straight line L1 extending toward the center of the corresponding one of the exit pupils is primarily 9, as shown in Fig. 4B. Thus, most of the element images are each formed by nine sub-pixels. However, according to Expression (8) above, $P > 9 \times Pp$ is satisfied. Thus, when the center of the set of sub-pixels 32 is positioned on the inside of the boundaries (i.e., the left end and the right end) obtained by defining the element image width P, the number of sub-pixels 32 that form some of the element images needs to be 10.

The viewing area optimization process explained above may be also applied to the multi-view method by which the converging point is formed at the viewing distance Ls1. More specifically, in the case where it is desired that the viewing area width is maximized at a distance that is other than the viewing distance Ls1 that is determined based on the hardware, it is necessary to determine the ratio m defining how many of the element images are each formed by as many sub-pixels as (n+1) so that the relationship defined in Expression (8) is satisfied.

Further, an element image array that is displayed on the FPD 31 for displaying a three-dimensional image is generated in the manner as explained below.

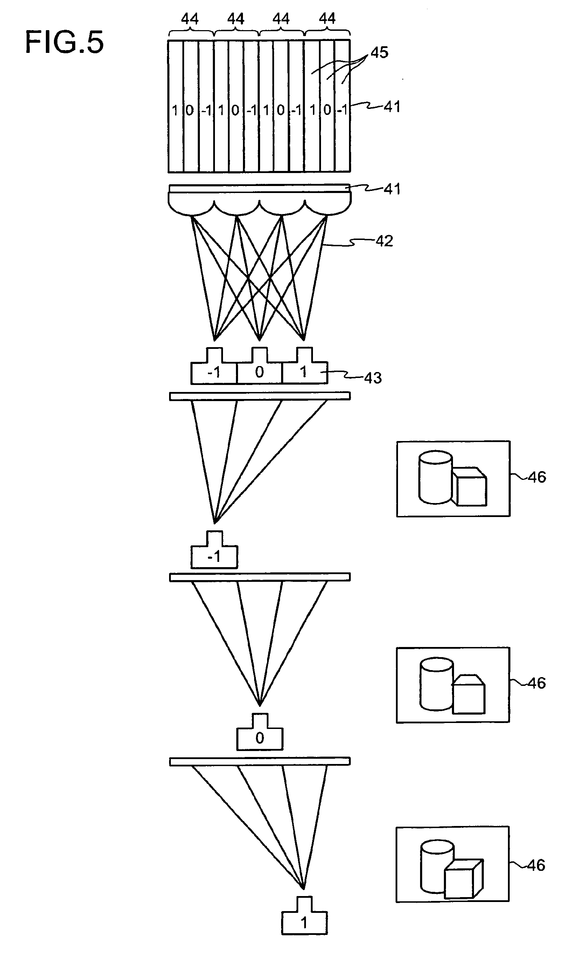

Fig. 5 is a schematic drawing of an example of the relationships between image obtaining positions 43 and parallax images 45 according to the multi-view display method. In Fig. 5, an example in which the number of viewpoints n satisfies n=3 is shown. In Fig. 5, each of the element images 44 is a set of parallax images 45 and corresponds to one of the lenses included in the lenticular plate. A set that is made up of such element images will be referred to as an element image array (i.e., an element image array 41). In this situation, each of multi-viewpoint images (e.g., each of the two-dimensional images indicated with the reference character 46 in Fig. 5) is an image obtained by picking up an image from one of a plurality of mutually different viewpoint positions (i.e., the image obtaining positions) respectively corresponding to the viewpoint numbers, while one projection plane is specified. When an element image array is generated based on the multi-viewpoint images that are obtained in this manner, the projection plane matches the surface of the display device while the three-dimensional image is being displayed.

In Fig. 5, the reference character 42 denotes the line segments each of which connects the center of the set of sub-pixels displaying each of the parallax images 45 to the center of each of the exit pupils (i.e., each of the lenses). The lines 42 converge at a finite distance (that is namely Ls1). In other words, when the three-dimensional image is displayed by using the multi-view method, the converging points correspond to the image obtaining positions 43.

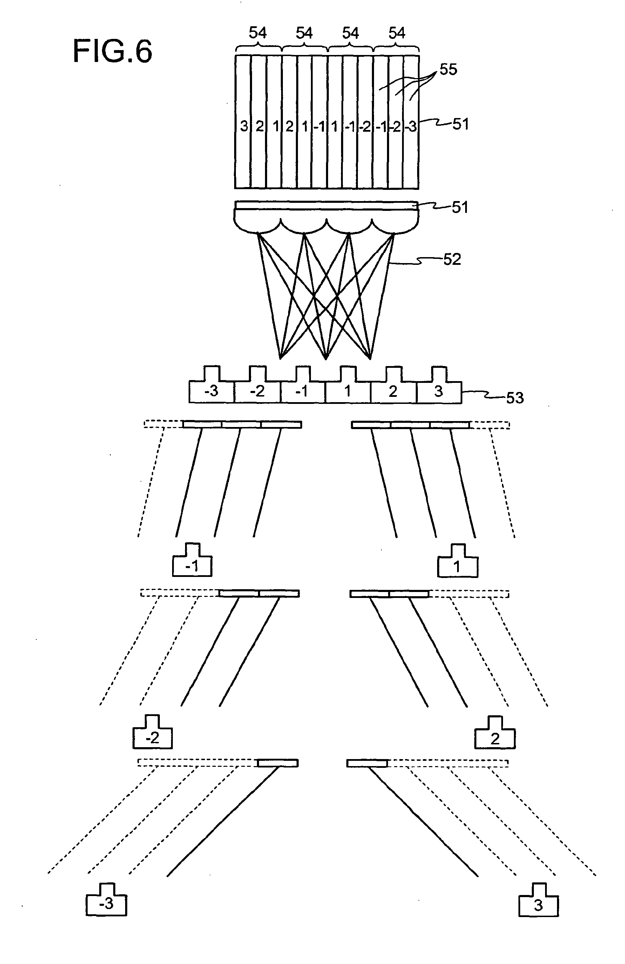

Fig. 6 is a schematic drawing of an example of the relationships between image obtaining positions 53 and parallax images 55 according to the 1D-II display method. In Fig. 6, an example in which the number of viewpoints n satisfies n=3 is shown. In Fig. 6, each of the element images 54 is a set of parallax images 55 and corresponds to one of the lenses included in the lenticular plate. A set that is made up of element images 54 is an element image array 51. The reference character 52 denotes the line segments each of which connects the center of the set of sub-pixels displaying each of the parallax images to the center of each of the exit pupils (i.e., each of the lenses). In this situation, because each of the line segments 52 satisfies the relationship defined in Expression (6) above, the optical beams are emitted as parallel optical beams. In other words, when the 1D-II method is used, it is ideal to obtain the multi-viewpoint images by using parallel optical beams, and to assign the obtained multi-viewpoint images to every n'th sub-pixels. In this situation, because the obtained multi-viewpoint images are parallel projection images, only the directions of the image obtaining positions 53 are defined, and the distance thereof does not have to be defined. Thus, the image obtaining positions 53 are positioned in a hypothetical manner.

The element image array displayed by the FPD 31 included in the displaying unit 3 is viewed from a position that is a finite distance away from the displaying unit 3. In the case where the viewing area optimization process is performed at the finite viewing distance, it is necessary to obtain information of optical beams (i.e., optical beam information) that are at a larger angle. Thus, the number of multi-viewpoint images that are required to form the element image array is larger than the number of viewpoints n that is the number of sub-pixels that are arranged horizontally and correspond to one lens. More specifically, when the 1D-II method as shown in Fig. 6 is used, the number of viewpoints n satisfies n=3 (i.e., the number of sub-pixels that are arranged horizontally and correspond to one lens is 3) and is equal to the number of viewpoints n according to the multi-view method as shown in Fig. 5; however, the number of image obtaining positions is 6 (identified with the viewpoint numbers -3, -2, -1, 1, 2, and 3) and is twice as many as the number of image obtaining positions according to the multi-view method.

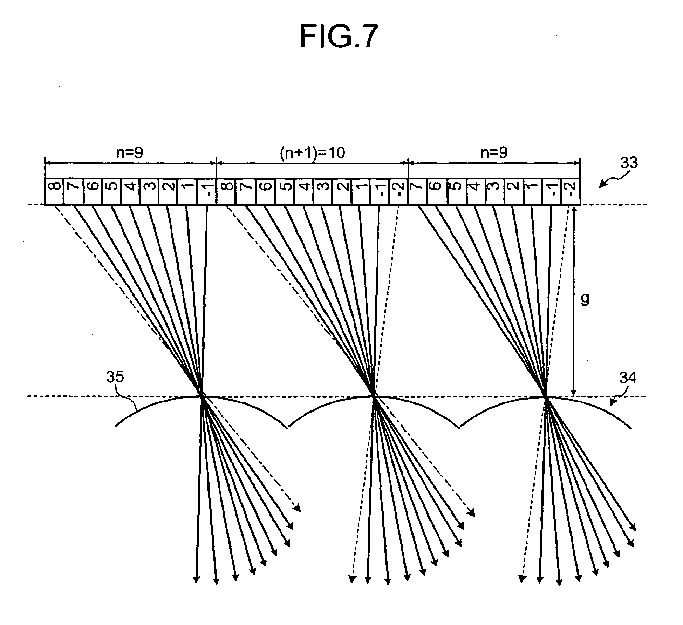

Next, the reason why the number of multi-viewpoint images that are required to form each of the element images increases when the 1D-II method is used will be explained, with reference to Fig. 7. Fig. 7 is a drawing for explaining the relationships between the element images 33, the parallax images that form the element images 33, and the exit pupils (i.e., the cylindrical lenses 35) in the case where the number of viewpoints n satisfies n=9.

In Fig. 7, it is assumed that the element image 33 that is formed by as many sub-pixels as 9 (i.e., n=9) and is positioned on the far right is formed by parallax images corresponding to the viewpoint numbers -2 to 7. When another element image 33 (i.e., the element image shown in the middle in Fig. 7) formed by as many sub-pixels as n+1=10 is positioned to the left of the element image 33, the additional sub-pixel displays a parallax image corresponding to the viewpoint number 8. Thus, another element image 33 that is positioned on the far left in the drawing and is formed by as many pixels as 9 (i.e., n=9) is formed by parallax images corresponding to the viewpoint numbers -1 to 8. In other words, because one of the element images is formed by as many sub-pixels as (n+1), the viewpoint numbers corresponding to the element image are each shifted (i.e., increased) by 1, and also, the relative position of the element image with respect to the lens is also displaced by one sub-pixel.

When the viewpoint numbers are shifted, it means that the directions in which the optical beams are emitted from the element image through the exit pupil are also shifted. In other words, it means that the direction in which the three-dimensional image is displayed is also shifted. Consequently, to have the arrangement in which the viewing area width is larger, i.e., to have the arrangement in which the viewing distance Ls is smaller, according to Expression (8) above, the value of the ratio m needs to be increased because it is necessary to obtain parallax images that contain the information of the optical beams (i.e., the optical beam information) that are at a larger angle.

As explained above, as for the parallax images according to the 1D-II method, the images derived from the viewpoint images corresponding to mutually the same viewpoints are assigned to the parallel optical beams. Thus, when the viewer views the element image array (i.e., the parallax images) displayed on the FPD 31 included in the displaying unit 3 at a finite distance, the viewer sees a perspective projection image at the distance that results from adding up the plurality of viewpoint images.

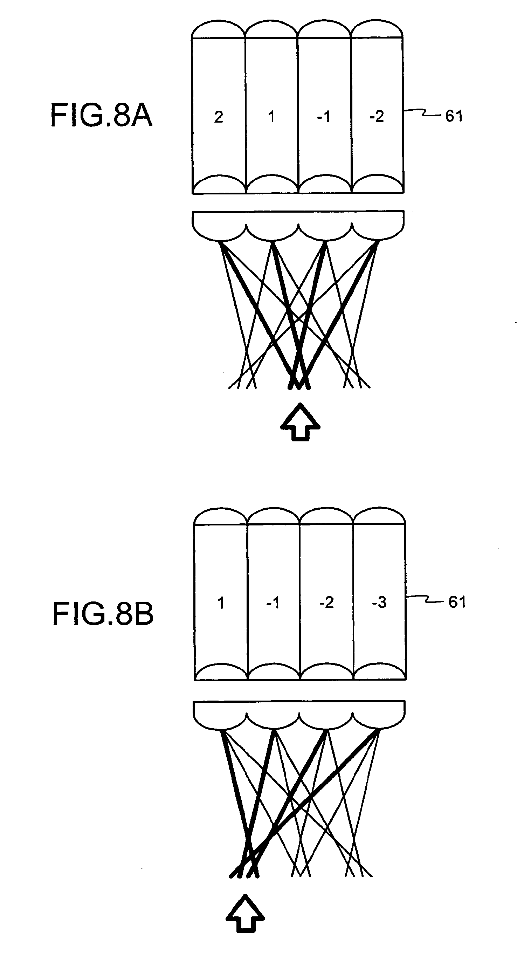

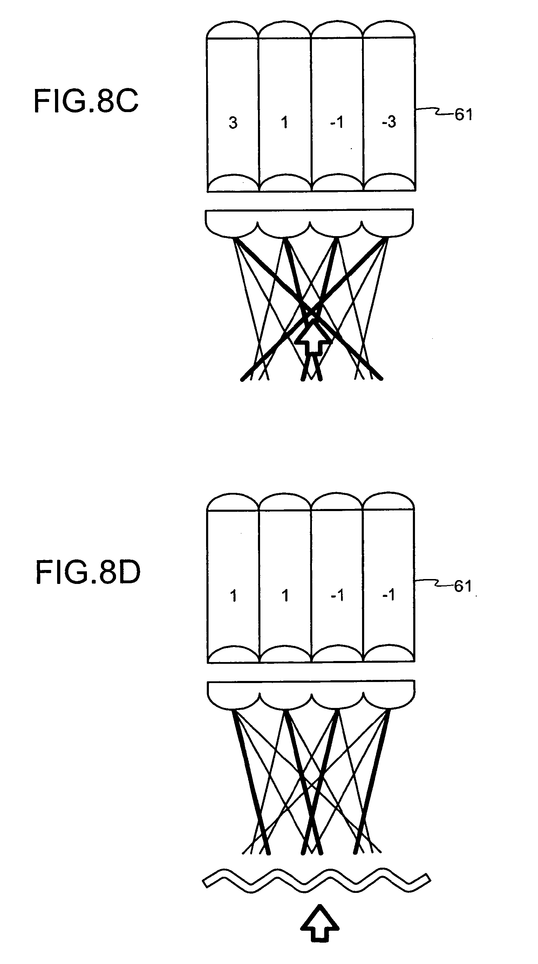

Figs. 8A, 8B, 8C, and 8D are drawings for explaining how the element image array is viewed according to the 1D-II method. It is assumed that the displaying unit 3 is viewed at a finite distance (in the position indicated by an arrow in the drawing), and that the parallax images 61 corresponding to the viewpoint numbers -2 to 2 are viewed, as shown in Fig. 8A. In the case where the viewing position is shifted to the left, the parallax images 61 corresponding to the viewpoint numbers -3 to 1 are viewed, as shown in Fig. 8B.

In the case where the viewer gets closer to the displaying unit 3 than when the viewer is at the viewing position shown in Fig. 8A, parallax images 61 corresponding to the viewpoint numbers -3, -1, 1, and 3 are viewed, as shown in Fig. 8C. On the contrary, in the case where the viewer gets farther from the displaying unit 3, parallax images 61 corresponding to the viewpoint numbers -1 and 1 are viewed, as shown in Fig. 8D. As a result, the viewer visually perceives a three-dimensional image by viewing a perspective projection image that corresponds to the viewing position.

In Figs. 8A, 8B, 8C, and 8D, the examples in which the images are viewed from a single viewpoint are shown; however, the same applies to the case where the viewer views the images with both eyes. It means that the viewer visually perceives, as the three-dimensional image, the perspective projection image corresponding to the viewing positions at both eyes. In other words, the displayed three-dimensional image is a result of roughly sampling the optical beams that would be obtained if the object actually existed. The three-dimensional image therefore has a unique set of coordinates within the space. This technical feature is definitely different from a technique that uses binocular parallax such as the two-view method that is conventionally known.

Also, the multi-view method shown in Fig. 5 is a method that is originally developed from the two-view method and by which the converging point is specified based on the distance between both eyes of the viewer at a specified viewing distance. However, in recent years, other methods have been proposed that display the image in the manner of a spatial image, such as a dense multi-view method by which the converging point is intentionally set at a position that is positioned farther than a presumed viewing distance or by which a distance that is sufficiently smaller than the distance between both eyes of the viewer is used.

As explained above, the method for generating the multi-viewpoint images varies depending on the method used for displaying the three-dimensional image and the displaying apparatus used for displaying the three-dimensional image. Thus, in the case where the generated multi-viewpoint images are applied to another display method or another displaying apparatus, it is difficult to maintain the level of accuracy of the displayed three-dimensional image. To cope with this situation, the three-dimensional image displaying apparatus 100 according to the present embodiment maintains the level of accuracy of the three-dimensional image being displayed by controlling the functional configurations described below so as to rearrange the multi-viewpoint images obtained from arbitrary image obtaining positions according to the specification of the displaying unit 3 and re-assign the re-arranged multi-viewpoint images to the sub-pixels.

Fig. 9 is a functional diagram of the three-dimensional image displaying apparatus 100 that is realized by a collaboration of the controlling unit 1 and the predetermined program stored in advance in the ROM 4 or the storage unit 6. As shown in Fig. 9, the three-dimensional image displaying apparatus 100 includes, as its functional configurations, the multi-viewpoint information receiving unit 11; the specification information obtaining unit 12; the element-image-array generating unit 13; and the display controlling unit 14.

The multi-viewpoint information receiving unit 11 functions as a receiving unit that receives multi-viewpoint information that has been input from the outside of the three-dimensional image displaying apparatus 100 via the communicating unit 7. The multi-viewpoint information receiving unit 11 outputs the received multi-viewpoint information to the element-image-array generating unit 13. In this situation, the multi-viewpoint information denotes a group of pieces of information containing, at least, a plurality of multi-viewpoint images that are used for displaying the three-dimensional image and the viewpoint numbers that indicate the sequence relationships among the image pickup positions corresponding to the viewpoint images. The multi-viewpoint images do not have to be input from the outside of the three-dimensional image displaying apparatus 100 via the communicating unit 7. Another arrangement is acceptable in which the multi-viewpoint images are received by reading the multi-viewpoint information that is stored in advance in the storage unit 6.

The specification information obtaining unit 12 reads, from the storage unit 6, the specification information 9 that defines specifications and restrictions that are associated with the hardware of the displaying unit 3 and outputs the read specification information 9 to the element-image-array generating unit 13. In this situation, examples of the specification information 9 include the horizontal pitch Ps of the cylindrical lenses 35, the number of viewpoints n for an element image that corresponds to one cylindrical lens 35, the pixel pitch Pp of the sub-pixels 32, and the angle (i.e., the viewing area emission angle) between the optical beams that are emitted, through the cylindrical lens 35, from sub-pixels that are positioned adjacent to one another.

The element-image-array generating unit 13 hypothetically implements the configuration of the displaying unit 3, based on the specification information 9 obtained by the specification information obtaining unit 12 and calculates, through a simulation process, how the optical beams will be omitted from the displaying unit 3 during the element image array generating process, which is explained later.

According to the present embodiment, the specification information 9 that is related to the displaying unit 3 included in the three-dimensional image displaying apparatus 100 is stored in the storage unit 6; however, the present invention is not limited to this example. Another arrangement is acceptable in which the specification information is obtained from a device that is positioned on the outside of the three-dimensional image displaying apparatus 100 via the communicating unit 7. Further, yet another arrangement is acceptable in which specification information related to a displaying unit that is included in another three-dimensional image displaying apparatus is obtained. In this situation, it is acceptable even if the three-dimensional image displaying apparatus 100 does not include the displaying unit 3.

The element-image-array generating unit 13 generates an element image array that corresponds to the specification of the displaying unit 3 from the multi-viewpoint information that has been input, based on the various types of information that have been obtained from the multi-viewpoint information receiving unit 11 and the specification information obtaining unit 12.

More specifically, the element-image-array generating unit 13 functions as a number of pixels determining unit that, based on the configuration of the displaying unit 3 that has hypothetically been implemented, performs the viewing area optimization process described above at the viewing distance Ls1 that is positioned a predetermined distance away from the cylindrical lens 35 and determines how many sub-pixels 32 should be in a set of pixels that forms each of the element images 33 by determining the ratio m defining how many of the element images are each formed by as many sub-pixels as (n+1).

The element-image-array generating unit 13 also judges whether the multi-viewpoint information that has been received by the multi-viewpoint information receiving unit 11 contains image obtaining position information. In this situation, the image obtaining position information denotes a group of pieces of information related to the image obtaining positions for the viewpoint images contained in the multi-viewpoint information and contains at least an image obtaining distance Lc.

The element-image-array generating unit 13 determines a viewing distance Ls2 based on the image obtaining position information or the total number of multi-viewpoint images that are contained in the multi-viewpoint information that has been received by the multi-viewpoint information receiving unit 11.

Further, the element-image-array generating unit 13 also functions as an obtaining position specifying unit that sequentially assigns viewpoint numbers toward both ends of the FPD 31, for every inter-optical-beam distance x (explained later), starting from such a position on the Ls2 plane that corresponds to the center line of the FPD 31, so as to specify the corresponding image obtaining positions.

Furthermore, the element-image-array generating unit 13 also functions as an incident position calculating unit that calculates the incident positions in which the display-purpose optical beams become incident on the Ls2 plane, the display-purpose optical beams being emitted from the sub-pixels in the FPD to which the viewing area optimization process has been applied. In this situation, the Ls2 plane denotes a plane that opposes the displaying unit 3 and is hypothetically specified in a position that is away from the displaying unit 3 (i.e., the cylindrical lenses 35) by the viewing distance Ls2, the displaying unit 3 representing the plane on which the three-dimensional image is displayed. The Ls2 plane may be a plane that is parallel to the displaying unit 3. Alternatively, the Ls2 plane may be a curved plane.

Further, the element-image-array generating unit 13 also functions as an obtaining position identifying unit that, for each of the incident positions, identifies one of the image obtaining positions that is positioned closest to the incident position, by comparing the incident positions in which the display-purpose optical beams become incident on the Ls2 plane with the image obtaining positions on the Ls2 plane, the display-purpose optical beams being emitted from the sub-pixels included in the FPD 31 to which the viewing area optimization process has been applied.

In addition, the element-image-array generating unit 13 also functions as a generating unit that generates an element image by assigning the parallax images corresponding to the viewpoint numbers of the image obtaining positions that have been identified, to the sub-pixels from which the display-purpose optical beams corresponding to the incident positions are emitted.

Furthermore, the element-image-array generating unit 13 also functions as a change receiving unit that receives, from the user via the operating unit 2, an instruction indicating that the value of the inter-optical-beam distance x and/or the value of the viewing distance Ls2 and/or the value of the viewing distance Ls1 should be changed and generates an element image array based on the values in the instruction.

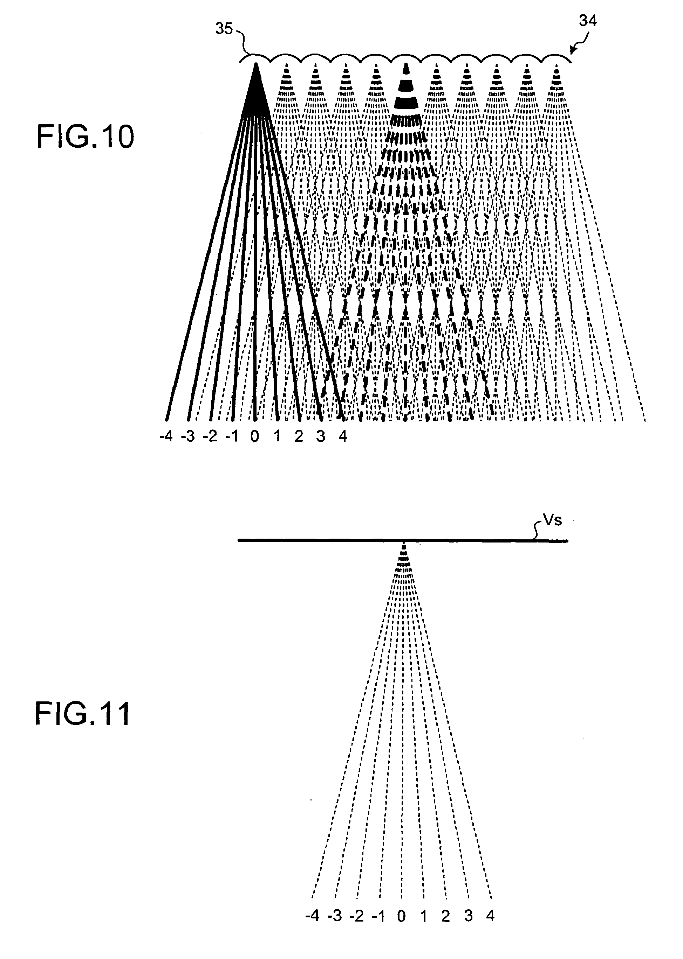

Next, the element-image-array generating unit 13 will be explained, with reference to Figs. 10 to 17. Fig. 10 is a horizontal cross-sectional view of the displaying unit 3 that uses the 1D-II method and corresponds to the case where n=9 is satisfied. Fig. 10 depicts the directions of the optical beams that are emitted through the exit pupils (i.e., the cylindrical lenses 35) before the viewing area optimization process is applied. Each of the optical beams that are emitted straight forward is indicated with the viewpoint number "0". Each of the optical beams that are emitted on the left side of the optical beams identified with the viewpoint number "0" is identified with a negative number, whereas each of the optical beams that are emitted on the right side of the optical beams identified with the viewpoint number "0" is identified with a positive number. This numbering system also applies to the other examples described below.

As explained above, when the 1D-II method in which no converging point is formed at a specific distance is used, the optical beams that are emitted through the exit pupils are parallel to one another. Accordingly, to obtain the optical beam information corresponding to these optical beams, as shown in Fig. 11, it is necessary to obtain multi-viewpoint images by performing a parallel projection toward a projection plane Vs (i.e., by performing a perspective projection from an infinite distance) from a total of nine viewpoints identified with the viewpoint numbers -4 to 4 corresponding to the viewpoint numbers -4 to 4 that are shown in Fig. 10. As a result, it is possible to make the arrangement in which the optical beams that are emitted through the exit pupils corresponding to the sub-pixels that are positioned in mutually the same place among the sub-pixels forming the element images are parallel optical beams.

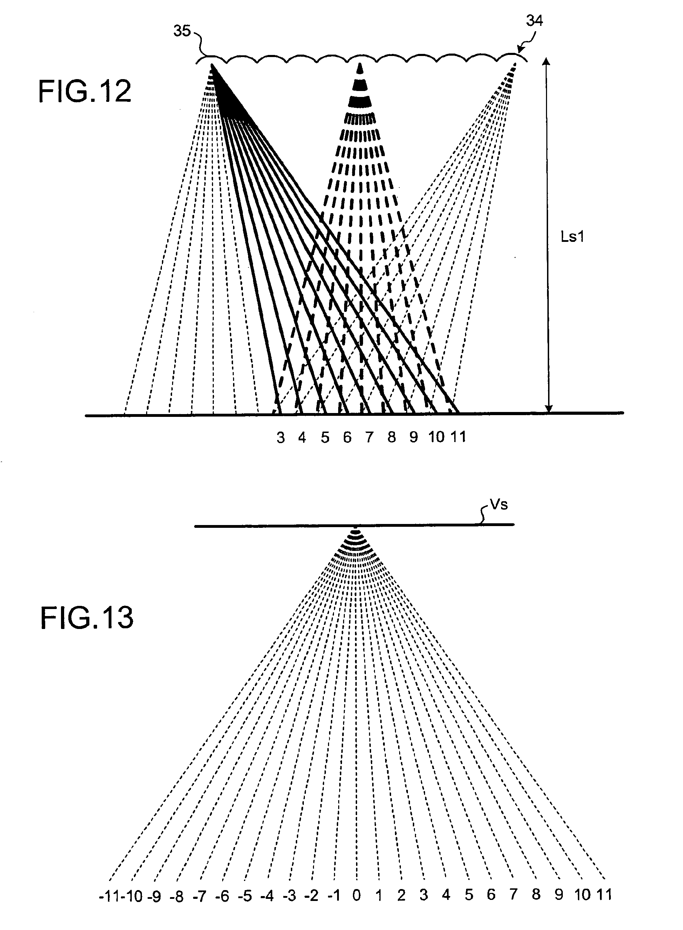

On the other hand, when the displaying unit 3 having the hardware configuration as shown in Fig. 10 is used, the directions of the optical beams emitted through the exit pupils in the case where the viewing area optimization process is performed with respect to the finite viewing distance Ls1 are shown in Fig. 12. Although the drawing is abstract, it is understood from the drawing that, to obtain the optical beam information of the optical beams emitted through the leftmost exit pupil (i.e., the cylindrical lens 35), it is necessary to obtain multi-viewpoint images by performing parallel projections from a total of nine viewpoints corresponding to the viewpoint numbers 3 to 11. When the 1D-II method is used, the number of multi-viewpoint images that form each of the element images increases, as explained above. Thus, with the configuration shown in Fig. 12, the number of multi-viewpoint images that are necessary for each of all the sub-pixels is 23. In other words, it is necessary to use twenty-three viewpoint numbers from -1 to 11. The relationships between the viewpoint numbers and the image obtaining directions with respect to the projection plane Vs are shown in Fig. 13.

By using Expression (9) below, it is possible to calculate the total number of multi-viewpoint images (i.e., the total number of viewpoints Na) that are required when the multi-viewpoint images are obtained by performing parallel projections. In Expression (9), the reference character "H" denotes the width of the screen of the FPD 31.

$$Na=(H-Ps+VW)\times g/L/Pp+1 \qquad\qquad (9)$$

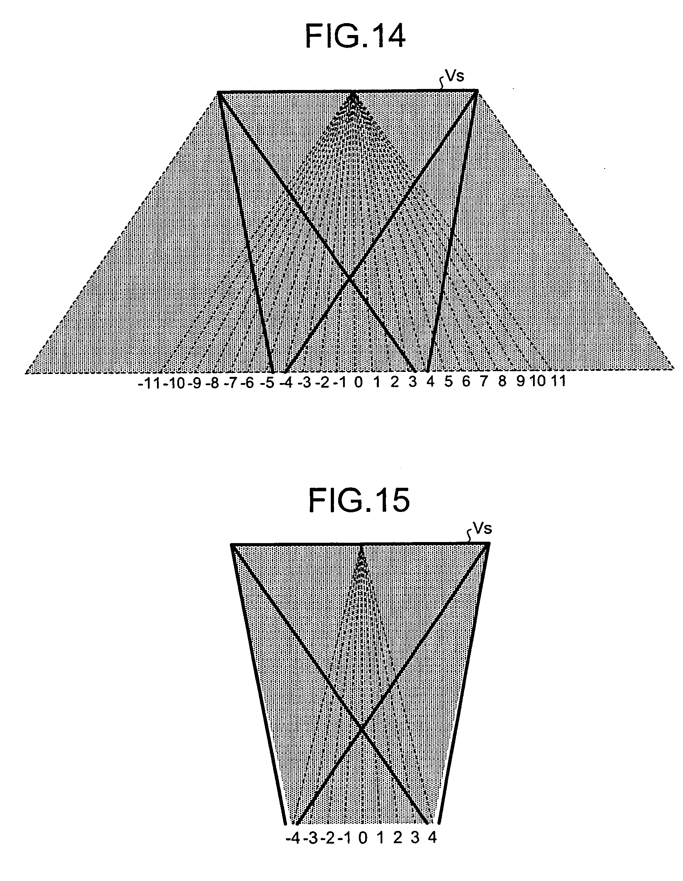

Fig. 14 is a drawing for explaining the relationships between the projection plane and the viewpoint numbers of the multi-viewpoint image obtaining positions. In Fig. 14, the area that corresponds to the optical beam information of the multi-viewpoint images that are obtained by performing the parallel projections from the twenty-three directions shown in Fig. 13 is indicated by shading. In this situation, the line segments drawn with broken lines extending from the viewpoint numbers -11 to 11 toward the projection plane Vs correspond to the optical beam information that is actually used for displaying the three-dimensional image (i.e., the display-purpose optical beams). In other words, it is understood from Fig. 14 that the area that corresponds to the optical beam information of the multi-viewpoint images is too large, compared to the display-purpose optical beams.

Fig. 15 is a drawing presented for a comparison with Fig. 14. Fig. 15 is another drawing for explaining the relationships between the projection plane Vs and the viewpoint numbers of the multi-viewpoint image obtaining positions. In Fig. 15, the area that corresponds to the optical beam information of the multi-viewpoint images that are obtained by performing a perspective projection from the viewing area optimizing distance Ls1 is indicated by shading. When the multi-viewpoint image obtaining distance is a finite distance, it means that the multi-viewpoint images are obtained by performing a perspective projection. The optical beams that are obtained from the nine viewpoints identified with the viewpoint numbers -4 to 4 at the finite distance of Ls1 are substantially equal to the display-purpose optical beams (shown with broken lines in the drawing) that are used for displaying the three-dimensional image. In other words, the viewing area optimizing distance Ls1 is the distance at which it is possible to obtain the optical beam information most efficiently. When the multi-view method is used, because a converging point is formed at the viewing distance, it is possible to make the arrangement in which the optical beam information used for displaying the three-dimensional image completely matches the optical beam information that is obtained as multi-viewpoint images.

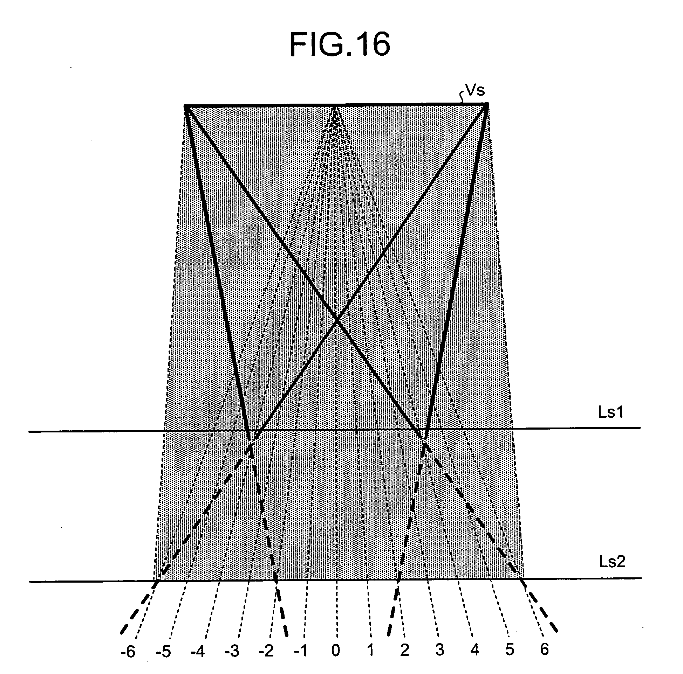

Fig. 16 is a drawing presented for a comparison with Figs. 14 and 15. Fig. 16 is another drawing for explaining the relationships between the projection plane Vs and the viewpoint numbers of the multi-viewpoint image obtaining positions. In Fig. 16, the area that corresponds to the optical beam information of the multi-viewpoint images that are obtained by performing a perspective projection from a viewing distance Ls2 that is shorter than an infinite distance but is longer than the viewing area optimizing distance Ls1 is indicated by shading. With the configuration shown in Fig. 16, it is possible to utilize the optical beam information of the multi-viewpoint images more efficiently than with the configuration shown in Fig. 14, but less efficiently than with the configuration shown in Fig. 15.

A summary of the outcomes with the configurations shown in Figs. 14, 15, and 16 is shown in the table below. In this table, "Errors Included in Display-purpose Optical Beams" denotes the amount of difference from parallel optical beams. The closer the distance is to an infinite distance, the smaller the errors are.

| Image Obtaining Positions | Number of Viewpoints | Errors Included in Display-purpose Optical Beams |
|---|---|---|
| (1) Infinite Distance | Na (Ideal Value) | No Errors Included |
| (2) Viewing Area Optimizing Distance Ls1 | n | Some Errors Included |
| (3) Finite Distance Ls2 (Ls2>Ls1) | N (Na>N>n) | Errors Between (1) and (2) |

The element-image-array generating unit 13 focuses on the divergence between the optical beam area corresponding to the optical beams for obtaining the images and the optical beam area corresponding to the display-purpose optical beams for displaying the three-dimensional image and generates the element image array from the parallax images contained in the multi-viewpoint information, based on the display-purpose optical beams at the viewing area optimizing distance Ls1. Next, the principle of the operation performed by the element-image-array generating unit 13 will be explained.

The intervals between the display-purpose optical beams that are emitted from the sub-pixels 32 through the exit pupils are viewed as regular intervals at a finite viewing distance L. In this situation, it is possible to express the value of the intervals (i.e., the inter-optical-beam distance x) at the distance L between the display-purpose optical beams that are emitted from one element image, by using Expression (10) below.

$$Pp:x=g:L \tag{10}$$

In this situation, the positions (i.e., the incident positions) in which the display-purpose optical beams become incident on the plane at the distance L correspond to the image obtaining positions that are used when the displaying unit 3 is used as the projection plane Vs. In other words, when an element image array is generated by assigning the parallax images extracted from the multi-viewpoint images obtained in these image obtaining positions to the corresponding sub-pixels, it is possible to display a three-dimensional image that corresponds to the distance L. In this situation, it is possible to make the number of multi-viewpoint images smaller than the number of multi-viewpoint images corresponding to the viewpoint numbers shown in Fig. 13.

For example, in the example shown in Fig. 16, the display-purpose optical beams are arranged so that the incident positions of the optical beams from the projection plane Vs are substantially the same as one another at the viewing area optimizing distance Ls1, and the display-purpose optical beams spread again beyond the distance Ls1. In this situation, on the plane at the distance Ls2, the inter-optical-beam distance x of the display-purpose optical beams emitted from one element image is defined by Expression (10) above. The display-purpose optical beams become incident in the positions identified with the viewpoint numbers -6 to 6. These incident positions of the display-purpose optical beams correspond to the multi-viewpoint image obtaining positions that are used when the displaying unit 3 is used as the projection plane Vs. The number of positions is thirteen, and these positions are identified with the viewpoint numbers from -6 to 6. In other words, compared to the multi-viewpoint images obtained by performing a parallel projection using the twenty-three viewpoints as shown in Fig. 13, it is possible to reduce the multi-viewpoint images corresponding to ten viewpoints.

The element-image-array generating unit 13 generates the element image array from the multi-viewpoint information received by the multi-viewpoint information receiving unit 11, based on the relationships between the incident positions of the display-purpose optical beams and the image obtaining positions that are explained above. More specifically, the element-image-array generating unit 13 specifies the image obtaining positions on the plane at the viewing distance Ls2 derived from the multi-viewpoint information, by using Expression (10) above. The element-image-array generating unit 13 then generates the element image array from the multi-viewpoint information by assigning, to the corresponding sub-pixels, the image obtaining positions that are respectively positioned closest to the incident positions in which the display-purpose optical beams become incident on the Ls2 plane, the display-purpose optical beams being emitted from the sub-pixels to which the viewing area optimization process at the viewing distance Ls1 has been applied.

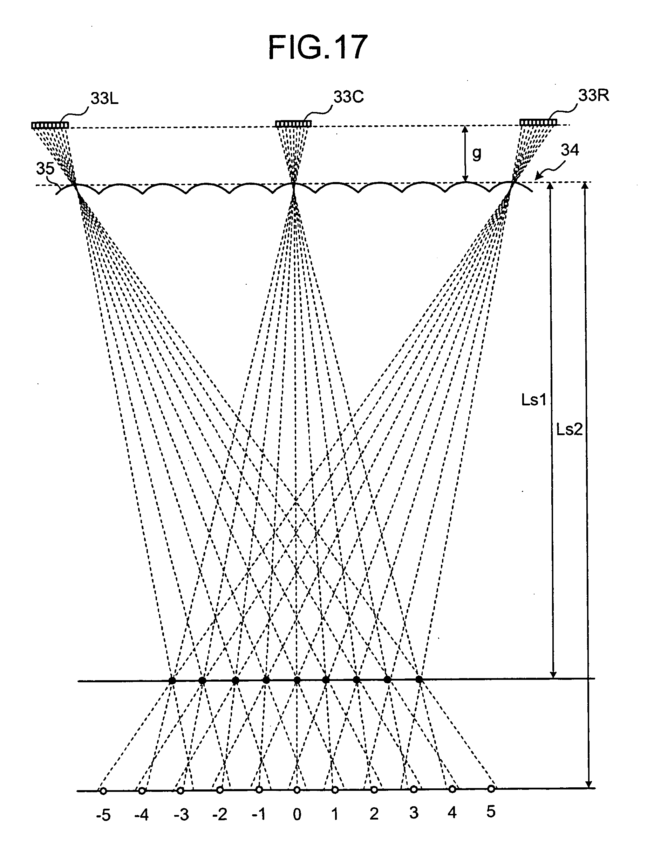

Next, the process of assigning the parallax images extracted from the multi-viewpoint images to the sub-pixels will be explained, with reference to Fig. 17. Fig. 17 is another horizontal cross-sectional view of the displaying unit 3. In Fig. 17, the directions of the display-purpose optical beams that are emitted from the sub-pixels to which the viewing area optimization process at the viewing distance Ls1 has been applied are shown. The reference character 33L denotes the element image that is positioned on the left end of the FPD 31. The reference character 33C denotes the element image that is positioned at the center of the FPD 31. The reference character 33R denotes the element image that is positioned on the right end of the FPD 31. It is assumed that the element-image-array generating unit 13 has specified the viewing distance Ls2 that is finite, based on the image obtaining distance Lc or the number of multi-viewpoint images contained in the multi-viewpoint information and has also specified the viewpoint numbers -5 to 5 that correspond to the image obtaining positions on the Ls2 plane by using Expression (10) above.

On this assumption, when a focus is placed on the element image 33L, it is understood that the incident positions on the Ls2 plane for the display-purpose optical beams that are emitted from the sub-pixels forming the element image 33L are respectively positioned close to the viewpoint numbers -3 to 5. In this situation, the element-image-array generating unit 13 obtains the nine parallax images that correspond to the viewpoint numbers -3 to 5 out of the multi-viewpoint information and assigns the obtained parallax images to the sub-pixels forming the element image 33L.

When a focus is placed on an element image 33C, it is understood that the incident positions on the Ls2 plane for the display-purpose optical beams that are emitted from the sub-pixels forming the element image 33C are respectively positioned close to the viewpoint numbers -4 to 4. In this situation, the element-image-array generating unit 13 obtains parallax images out of the nine multi-viewpoint images that correspond to the viewpoint numbers -4 to 4 and assigns the obtained parallax images to the sub-pixels forming the element image 33C.

Further, when a focus is placed on an element image 33R, it is understood that the incident positions on the Ls2 plane for the display-purpose optical beams that are emitted from the sub-pixels forming the element image 33R are respectively positioned close to the viewpoint numbers -5 to 3. In this situation, the element-image-array generating unit 13 obtains parallax images out of the nine multi-viewpoint images that correspond to the viewpoint numbers -5 to 3 and assigns the obtained parallax images to the sub-pixels forming the element image 33R.

As explained above, the element-image-array generating unit 13 generates the element image array by assigning the parallax images that are extracted from the corresponding multi-viewpoint images to all of the sub-pixels in the FPD 31. In the example shown in Fig. 17, no element image that is formed by as many sub-pixels as (n+1) is shown. However, it is assumed that parallax images extracted from the corresponding multi-viewpoint images are also assigned to the sets of sub-pixels that are each formed by as many sub-pixels as (n+1), in the same manner as described above.

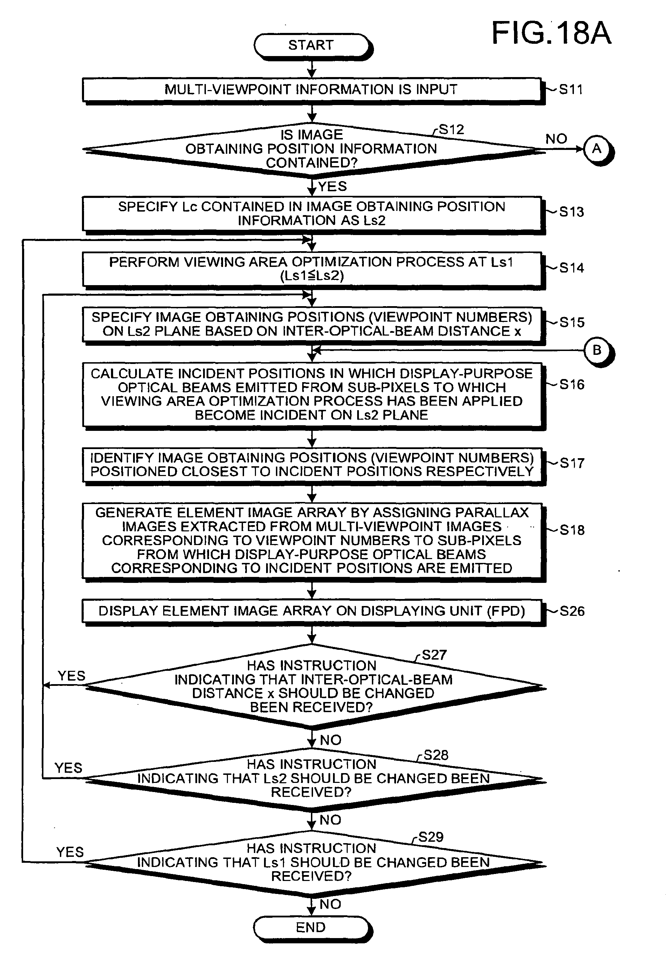

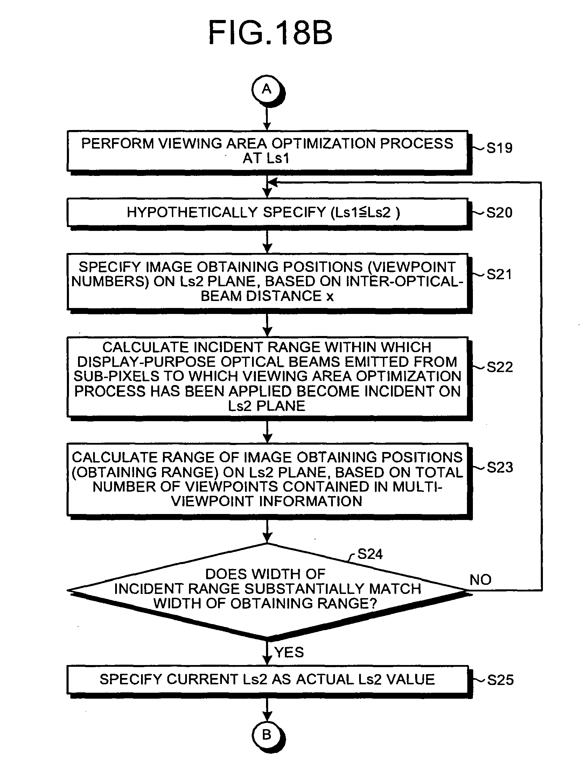

Next, an operation performed the three-dimensional image displaying apparatus 100 will be explained, with reference to Figs. 18A and 18B. Figs. 18A and 18B are flowcharts of a procedure in the element image array generating process. This process is performed on an assumption that the specification information obtaining unit 12 has obtained the specification information 9 related to the displaying unit 3 from the storage unit 6 or the like and has output the obtained specification information 9 to the element-image-array generating unit 13.

First, the multi-viewpoint information receiving unit 11 receives an input of multi-viewpoint information via the communicating unit 7 or the like (step S11). The element-image-array generating unit 13 then judges whether the received multi-viewpoint information contains image obtaining position information (step S12).

In the case where the element-image-array generating unit 13 has judged at step S12 that the multi-viewpoint information contains image obtaining position information (step S12: Yes), the element-image-array generating unit 13 specifies the image obtaining distance Lc contained in the image obtaining position information as the viewing distance Ls2 (step S13).

After that, the element-image-array generating unit 13 performs the viewing area optimization process at the viewing distance Ls1, based on the specification information 9 obtained by the specification information obtaining unit 12 (step S14). In this situation, the viewing distance Ls1 is a finite viewing distance, and Ls1≤Ls2 is satisfied.

Subsequently, the element-image-array generating unit 13 sequentially assigns viewpoint numbers toward both ends of the FPD 31, for every inter-optical-beam distance x that has been calculated by using Expression (10) above, starting from such a position on the Ls2 plane that corresponds to the center line of the FPD 31. The element-image-array generating unit 13 thus specifies the image obtaining positions on the Ls2 plane (step S15).

In the present embodiment, the inter-optical-beam distance x is determined based on Expression (10) above. However, the present invention is not limited to this example. Another arrangement is acceptable in which, in the case where the multi-viewpoint information contains information indicating the value of the intervals between the image obtaining positions, the value of the intervals between the image obtaining positions are used as the inter-optical-beam distance x.

Next, the element-image-array generating unit 13 calculates the incident positions in which the display-purpose optical beams become incident on the Ls2 plane, the display-purpose optical beams being emitted from the sub-pixels to which the viewing area optimization process has been applied (step S16). The element-image-array generating unit 13 then identifies the image obtaining positions (i.e., the viewpoint numbers) that are respectively positioned closest to the incident positions (step S17).

After that, the element-image-array generating unit 13 generates an element image array by assigning the parallax images extracted from the multi-viewpoint images corresponding to the viewpoint numbers that have been identified at step S17 respectively to the sub-pixels from which the display-purpose optical beams corresponding to the incident positions on the Ls2 plane are emitted (step S18). The process then proceeds to step S26.

On the other hand, in the case where the element-image-array generating unit 13 has judged at step S12 that the multi-viewpoint information contains no image obtaining position information (step S12: No), the element-image-array generating unit 13 performs the viewing area optimization process at the viewing distance Ls1 that is finite, based on the specification information 9 that has been obtained by the specification information obtaining unit 12 (step S19). After that, the element-image-array generating unit 13 hypothetically specifies a viewing distance Ls2 that is finite (step S20). In this situation, Ls1 and Ls2 have a relationship that satisfies Ls1≤Ls2.

The element-image-array generating unit 13 sequentially assigns viewpoint numbers toward both ends of the FPD 31, for every inter-optical-beam distance x that has been calculated by using Expression (10) above, starting from such a position on the Ls2 plane that corresponds to the center line of the FPD 31. The element-image-array generating unit 13 thus specifies the image obtaining positions on the Ls2 plane (step S21).

After that, the element-image-array generating unit 13 calculates the width of the incident range within which the display-purpose optical beams become incident on the Ls2 plane, the display-purpose optical beams being emitted from the sub-pixels to which the viewing area optimization process has been applied. In other words, the element-image-array generating unit 13 calculates the viewing area width VW on the Ls2 plane (step S22).

Subsequently, the element-image-array generating unit 13 calculates the width of the image obtaining range on the Ls2 plane, based on the total number of viewpoints that is contained in the multi-viewpoint information (step S23). More specifically, the element-image-array generating unit 13 calculates the image obtaining range by multiplying "the number of parallax image-1" by "the inter-optical-beam distance x".

Next, the element-image-array generating unit 13 judges whether the width of the incident range that has been calculated at step S22 substantially matches the width of the image obtaining range that has been calculated at step S23 (step S24). The standard used in judging whether the two widths substantially match may be selected arbitrarily.

In the case where the element-image-array generating unit 13 has judged at step S24 that the two widths do not match (step S24: No), the process returns to step S19 where the element-image-array generating unit 13 hypothetically specifies another value as Ls2. On the contrary, in the case where the element-image-array generating unit 13 has judged at step S24 that the two widths substantially match (step S24: Yes), the element-image-array generating unit 13 specifies the current value of Ls2 that has hypothetically been specified as the actual value (step S25). The process then proceeds to step S16.

At step S26, the display controlling unit 14 causes the sub-pixels 32 in the FPD 31 to display the element image array that has been generated at step S18 so as to have a three-dimensional image displayed on the displaying unit 3 (step S26).

In this situation, in the case where instruction information indicating that the value of the inter-optical-beam distance x should be changed has been input via the operating unit 2 (step S27: Yes), after the element-image-array generating unit 13 has changed the value of the inter-optical-beam distance x to the instructed value, the process returns to step S15. After that, the element-image-array generating unit 13 generates an element image array by using the inter-optical-beam distance x that has been changed, by performing the processes at steps S16 to S18.

In other words, the user of the three-dimensional image displaying apparatus 100 is able to change the value of the inter-optical-beam distance x, while viewing the three-dimensional image being displayed on the displaying unit 3. Thus, the user is able to correct the way the three-dimensional image appears, as necessary.

Also, in the case where instruction information indicating that the value of Ls2 should be changed has been input via the operating unit 2 (step S27: No; and step S28: Yes), after the element-image-array generating unit 13 has changed the value of Ls2 to the instructed value, the process returns to step S15. After that, the element-image-array generating unit 13 generates an element image array by using the value of Ls2 that has been changed, by performing the processes at steps S16 to S18.

In other words, the user of the three-dimensional image displaying apparatus 100 is able to change the value of Ls2, while viewing the three-dimensional image being displayed on the displaying unit 3. Thus, the user is able to correct the way the three-dimensional image appears, as necessary. It is assumed that the value of Ls2 after it is changed is still equal to or larger than the value of Ls1. Accordingly, an arrangement is acceptable in which the input from the operating unit 2 is controlled so that the value of Ls2 does not become smaller than the value of Ls1. Another arrangement is also acceptable in which the value of Ls1 is automatically corrected according to the value of Ls2.

In addition, in the case where instruction information indicating that the value of Ls1 should be changed has been input via the operating unit 2 (step S28: No; and step S29: Yes), after the element-image-array generating unit 13 has changed the value of Ls1 to the instructed value, the process returns to step S14. After that, the element-image-array generating unit 13 generates an element image array by using the value of Ls1 that has been changed, by performing the processes at steps S15 to S18.

In other words, the user of the three-dimensional image displaying apparatus 100 is able to change the value of Ls1, while viewing the three-dimensional image being displayed on the displaying unit 3. Thus, the user is able to correct the way the three-dimensional image appears, as necessary. It is assumed that the value of Ls1 after it is changed is still equal to or smaller than the value of Ls2. Accordingly, an arrangement is acceptable in which the input from the operating unit 2 is controlled so that the value of Ls1 does not become larger than the value of Ls2. Another arrangement is also acceptable in which the value of Ls2 is automatically corrected according to the value of Ls1.

In the case where the element-image-array generating unit 13 has judged that no instruction indicating that the parameters should be changed has been input via the operating unit 2 (step S27: No; Step S28: No; and step S29: No), the process ends.

The procedure in the element image array generating process described above is equally applicable to both the multi-view method and the ID-II method. In other words, it is possible to generate an element image array that corresponds to the specifications of the displaying unit 3, based on multi-viewpoint information, regardless of whether the multi-viewpoint information that has been received by the multi-viewpoint information receiving unit 11 is generated according to the multi-view method or according to the 1D-II method.

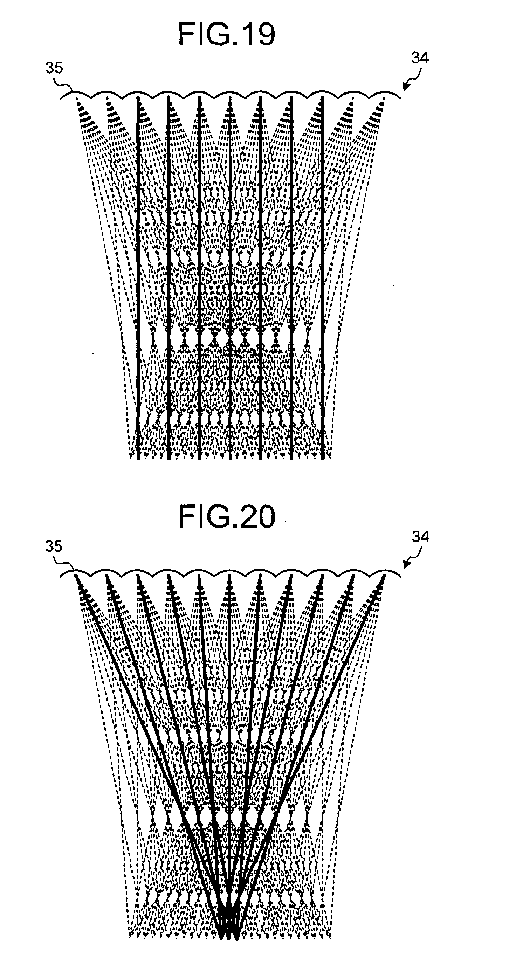

Next, how the element image array generated through the element image array generating process described above will be displayed will be explained, with reference to Figs. 19 and 20. Shown in Figs. 19 and 20 are the directions of the optical beams that are emitted from the sub-pixels to which the parallax images have been assigned, the parallax images being derived from the multi-viewpoint images that are obtained from mutually the same viewpoint positions according to the 1D-II method.

Fig. 19 depicts the directions of the optical beams corresponding to the case where the parallax images each of which is extracted from a single viewpoint image obtained as a parallel projection image have been assigned to the sub-pixels. As shown with the bold lines in Fig. 19, the optical beams emitted from the sub-pixels are parallel to one another. In this situation, the directions of the optical beams emitted from the sub-pixels match the directions of the viewing that are used when the parallax images are obtained. Thus, there is no divergence between the information represented by the parallax images and the information represented by the display-purpose optical beams emitted from the sub-pixels. Consequently, it is possible to display a proper three-dimensional image.

Fig. 20 depicts the directions of the optical beams corresponding to the case where the parallax images each of which is extracted from a single viewpoint image obtained as a perspective projection image at a finite viewing distance have been assigned to the sub-pixels. As shown with the bold lines in Fig. 20, the optical beams emitted from the sub-pixels are substantially in a perspective relationship. When the 1D-II method is used, because no converging point is formed at a finite viewing distance, there will be a divergence (i.e., an error) between the information represented by the parallax images and the information represented by the display-purpose optical beams emitted from the sub-pixels. However, it is possible to make the directions of the optical beams emitted from the sub-pixels close to the directions of the viewing that are used when the parallax images are obtained. Consequently, as a whole, it is possible to display a three-dimensional image that is substantially proper.

As explained above, when the three-dimensional image displaying apparatus 100 according to the present embodiment is used, the parallax images that are contained in the multi-viewpoint information obtained under an arbitrary condition are assigned to the pixels included in the display panel, based on the incident positions of the optical beams emitted from the pixels and the image obtaining positions of the parallax images, while the number of pixels forming each element image is adjusted so that the optical beams become incident substantially in mutually the same area at the viewing distance Ls1. As a result, it is possible to make the directions of the optical beams emitted from the pixels close to the directions of the viewing that are used when the parallax images are obtained. Consequently, it is possible to generate an element image array used for displaying a three-dimensional image, while the level of accuracy is maintained by the simple process.

In the element image array generating process described above, in the case where the value of the intervals between the image obtaining positions has been changed (i.e., in the case where the value of the inter-optical-beam distance x has been changed), the depth of the displayed three-dimensional image also changes. For example, if the value of the intervals between the image obtaining positions becomes half, the three-dimensional image is displayed as if it was collapsed in the depth direction to substantially half the size.

Also, in the case where the image obtaining distance has been changed due to a change in the viewing distance Ls1 and/or the viewing distance Ls2, the degree of perspective of the three-dimensional image also changes. In this situation, for example, when the image obtaining distance becomes smaller, the degree of perspective becomes larger.

Thus, an object that is positioned in front of the displaying unit 3 is displayed larger, while an object that is positioned behind the displaying unit 3 is displayed smaller. On the contrary, when the image obtaining distance becomes larger, the degree of perspective becomes smaller. When the degree of perspective is zero, an object that is positioned farther from the viewer is displayed smaller than an object that is positioned closer to the viewer. In the case where the user knows how the three-dimensional image should be displayed properly, the user is able to adjust the image obtaining distance and the value of the intervals between the image obtaining positions based on the proper relationship, so as to realize a desired way the three-dimensional image should be displayed.

According to the present embodiment, the user is able to check to see if the three-dimensional image is displayed accurately by visually perceiving the three-dimensional image being displayed on the displaying unit 3. However, the present invention is not limited to this example. For example, another arrangement is acceptable in which it is judged whether the three-dimensional image is displayed accurately by comparing correct three-dimensional image data with the three-dimensional image being displayed on the displaying unit 3.

More specifically, in this situation, the three-dimensional image displaying apparatus 100 includes an image pickup device that picks up images of the three-dimensional image being displayed on the displaying unit 3 from a plurality of viewpoints. The element-image-array generating unit 13 judges whether the displayed three-dimensional image is accurately displayed by calculating a degree of matching between the image data of the three-dimensional image obtained by the image pickup device and the proper three-dimensional image data that is stored in advance in the storage unit 6 or the like for the purpose of comparison. In the case where the result of the judging process indicates that the degree of matching is smaller than a predetermined threshold value, the element-image-array generating unit 13 corrects the values of the viewing distance Ls1, the viewing distance Ls2, and the inter-optical-beam distance x, and makes adjustments until the degree of matching exceeds the predetermined threshold value. According to this method, because the level of accuracy of the displayed three-dimensional image is automatically adjusted, it is possible to present an accurate three-dimensional image to the user.

In the description of the present embodiment, displaying the three-dimensional image in the horizontal direction is explained. However, the present invention is not limited to this example. It is acceptable to apply the present invention to the vertical direction as well. For example, in the case where it is possible to make an arrangement in which the image obtaining distance for parallax images in the vertical direction is different from the image obtaining distance for parallax images in the horizontal direction (i.e., in the case where it is possible to make the degrees of perspective mutually different), it is possible to display a three-dimensional image that has a proper degree of perspective both in the vertical direction and in the horizontal direction by obtaining parallax images at the viewing distance Ls2 for the horizontal direction and at the viewing distance Ls1 for the vertical direction.

Exemplary embodiments of the present invention have been explained above. However, the present invention is not limited to these exemplary embodiments. Various types of modifications, substitutions, and additions may be applied to the present invention without departing from the scope of the present invention.

For example, an arrangement is acceptable in which the program that executes the processes performed by the three-dimensional image displaying apparatus 100 is provided as being recorded on a computer-readable recording medium such as a Compact Disc Read-Only Memory (CD-ROM), a Floppy (registered trademark) Disk (FD), a Digital Versatile Disk (DVD), or the like, in an installable format or in an executable format.

Another arrangement is acceptable in which the program that executes the processes performed by the three-dimensional image displaying apparatus 100 is stored in a computer connected to a network like the Internet so that the program is provided as being downloaded via the network.

In this situation, the program is loaded into the RAM 5 when the program is read from the recording medium and executed in the three-dimensional image displaying apparatus 100, so that the constituent elements that are explained above in the description of the functional configurations are generated in the RAM 5.

In the description of the exemplary embodiments above, the lenticular plate 34 that includes the cylindrical lenses 35 is used as the optical beam controlling element. However, the present invention is not limited to this example. Another arrangement is acceptable in which a lens array or a pin-hole array is used as the optical beam controlling element.

Additional advantages and modifications will readily occur to those skilled in the art. Therefore, the invention in its broader aspects is not limited to the specific details and representative embodiments shown and described herein. Accordingly, various modifications may be made without departing from the spirit or scope of the general inventive concept as defined by the appended claims and their equivalents.

**Claims**

1.  A three-dimensional image processing apparatus (100) comprising:

    a storage unit (6) that stores specification information (9) defining specifications related to a display panel (31) and an optical beam controlling unit (34), the display panel (31) including pixels each of which has a predetermined width and arranged in a matrix and displaying element images used for displaying a three-dimensional image, and the optical beam controlling unit (34) being disposed in front of the display panel (31) and controlling directions in which optical beams are emitted from the pixels by using exit pupils that are arranged with a pitch width obtained by multiplying the predetermined width approximately by an integer so that the element images respectively corresponding to the exit pupils are emitted toward an area positioned a predetermined distance away from the display panel (31);

a receiving unit (11) that receives multi-viewpoint images containing a plurality of parallax images that are respectively obtained from mutually different viewpoint positions;

a number of pixels determining (13) unit that, based on the specification information (9), determines the number of pixels corresponding to each of the element images in order for directions of optical beams to become incident substantially in a mutually same area that is positioned a first viewing distance away from the optical beam controlling unit (34), the optical beams each connecting a center of the set of pixels to a center of one of the exit pupils corresponding to the one of the element images;

an obtaining position specifying unit (13) that, based on the specification information (9), specifies image obtaining positions in which the multi-viewpoint images are obtained, on a plane that is positioned a second viewing distance away from the optical beam controlling unit (34);

an incident position calculating unit (13) that calculates incident positions in which the optical beams that are emitted through the exit pupils from the pixels corresponding to the element images become incident on the plane at the second viewing distance;

an obtaining position identifying unit (13) that, for each of the incident positions, identifies one of the image obtaining positions that is positioned closest to the incident position; and

a generating unit (13) that generates an element image array (41) by assigning the parallax images (45) extracted from the multi-viewpoint images corresponding to the image obtaining positions (43) identified by the obtaining position identifying unit (13), to the pixels from which the optical beams corresponding to the incident positions are emitted, respectively.

2. The apparatus (100) according to claim 1, wherein

the receiving unit (11) receives an image obtaining distance indicating a distance between a projection plane containing a gazing point used when the multi-viewpoint images are obtained and the image obtaining positions (43), and

the obtaining position specifying unit (13) specifies the image obtaining distance received by the receiving unit (11) as the second viewing distance.

3. The apparatus (100) according to claim 1, wherein the obtaining position specifying unit (13) determines a third viewing distance as the second viewing distance on a plane positioned the third viewing distance away from the optical beam controlling unit (34), so that a width of an image obtaining area within which the image obtaining positions (43) are specified for the multi-viewpoint images substantially matches a width of an incident area within which the optical beams emitted through the exit pupils from the pixels forming the element images become incident on a plane at the third viewing distance.

4. The apparatus (100) according to any of claims 1 to 3, wherein the obtaining position specifying unit (13) determines a value of intervals between the image obtaining positions (43) on the plane at the second viewing distance from the predetermined width of each of the pixels, based on a relationship between a distance from the display panel (31) to the optical beam controlling unit (34) and a viewing distance from the optical beam controlling unit (34).

5. The apparatus (100) according to claim 1, further comprising a change receiving unit (11) that receives an instruction of changing the first viewing distance, wherein

the number of pixels determining unit re-adjusts the number of pixels corresponding to each of the element images so that the directions of the optical beams become incident substantially in mutually the same area positioned at the changed first viewing distance.

6. The apparatus (100) according to claim 1, further comprising a change receiving unit (11) that receives an instruction of changing the second viewing distance, wherein

the obtaining position specifying unit (13) re-specifies the image obtaining positions (43) in which the multi-viewpoint images are obtained on a plane positioned at the changed second viewing distance.

7. The apparatus (100) according to claim 1, further comprising a change receiving unit (11) that receives an instruction of changing a value of intervals between the image obtaining positions (43) specified on the plane at the second viewing distance, wherein

the obtaining position specifying unit (13) re-specifies the image obtaining positions (43) in which the multi-viewpoint images are obtained with the intervals between the changed image obtaining positions (43).

8. The apparatus (100) according to claim 1, wherein the number of pixels determining unit discretely distributes one or more second element images in a display array of first element images, each of the second element images being formed by as many parallax images (45) as (n+1) extracted from multi-viewpoint images obtained from as many viewpoint positions as (n+1), each of the first element images being formed by as many parallax images (45) as n extracted from multi-viewpoint images obtained from as many viewpoint positions as n.

9. A three-dimensional image processing method comprising:

receiving a plurality of multi-viewpoint images respectively obtained from mutually different viewpoint positions;
determining a number of pixels corresponding to each of the element images, based on specification information (9), in order for directions of optical beams to become incident substantially in a mutually same area that is positioned a first viewing distance away from the optical beam controlling unit (34), the optical beams each connecting a center of the set of pixels to a center of one of the exit pupils corresponding to the one of the element images, the specification information (9) defining specifications related to a display panel (31) and an optical beam controlling unit (34), the display panel (31) including pixels each of which has a predetermined width and arranged in a matrix and
displaying element images used for displaying a three-dimensional image, and the optical beam controlling unit (34) being disposed in front of the display panel (31) and
controlling directions in which optical beams are emitted from the pixels by using exit pupils that are arranged with a pitch width obtained by multiplying the predetermined width approximately by an integer so that the element images respectively corresponding to the exit pupils are emitted toward an area positioned a predetermined distance away from the display panel (31);
specifying, based on the specification information (9), image obtaining positions (43) in which the multi-viewpoint images are obtained, on a plane that is positioned a second viewing distance away from the optical beam controlling unit (34);
calculating incident positions in which the optical beams that are emitted, through the exit pupils, from the pixels corresponding to the element images become incident on the plane at the second viewing distance;
identifying, for each of the incident positions, one of the image obtaining positions (43) that is positioned closest to the incident position; and
generating an element image array (41) by assigning the parallax images (45) extracted from the multi-viewpoint images corresponding to the image obtaining positions (43) identified by the obtaining position identifying unit (13), to the pixels from which the optical beams corresponding to the incident positions are emitted, respectively.

10. A computer program product having a computer readable medium including programmed instructions for processing a three-dimensional image, wherein the instructions, when executed by a computer, cause the computer to perform:

receiving a plurality of multi-viewpoint images respectively obtained from mutually different viewpoint positions;
determining a number of pixels corresponding to each of the element images, based on specification information (9), in order for directions of optical beams to become incident substantially in a mutually same area that is positioned a first viewing distance away from the optical beam controlling unit (34), the optical beams each connecting a center of the set of pixels to a center of one of the exit pupils corresponding to the one of the element images, the specification information (9) defining specifications related to a display panel (31) and an optical beam controlling unit (34), the display panel (31) including pixels each of which has a predetermined width and arranged in a matrix and displaying element images used for displaying a three-dimensional image, and the optical beam controlling unit (34) being disposed in front of the display panel (31) and controlling directions in which optical beams are emitted from the pixels by using exit pupils that are arranged with a pitch width obtained by multiplying the predetermined width approximately by an integer so that the element images respectively corresponding to the exit pupils are emitted toward an area positioned a predetermined distance away from the display panel (31);
specifying, based on the specification information (9), image obtaining positions (43) in which the multi-viewpoint images are obtained, on a plane that is positioned a second viewing distance away from the optical beam controlling unit (34);
calculating incident positions in which the optical beams that are emitted, through the exit pupils, from the pixels corresponding to the element images become incident on the plane at the second viewing distance;

identifying, for each of the incident positions, one of the image obtaining positions (43) that is positioned closest to the incident position; and

generating an element image array (41) by assigning the parallax images (45) extracted from the multi-viewpoint images corresponding to the image obtaining positions (43) identified by the obtaining position identifying unit (13), to the pixels from which the optical beams corresponding to the incident positions are emitted, respectively.

# FIG.1

100

| CONTROLLING UNIT | OPERATING UNIT | DISPLAYING UNIT |
|---|---|---|
| 1 | 2 | 3 |

8

| ROM | RAM | STORAGE UNIT | COMMUNICATING UNIT |
|---|---|---|---|
| 4 | 5 | 6 | 7 |

# FIG.2

# FIG.3A

# FIG.3B

# FIG.4A

# FIG.4B

FIG.5

# FIG.6

# FIG.7

FIG.8A

FIG.8B

FIG.8C

3 | 1 | -1 | -3    61

FIG.8D

1 | 1 | -1 | -1    61

# FIG.9

STORAGE UNIT ⌐6

SPECIFICATION INFORMATION ⌐9

COMMUNICATING UNIT ⌐7

100

SPECIFICATION INFORMATION OBTAINING UNIT ⌐12

MULTI-VIEWPOINT INFORMATION RECEIVING UNIT ⌐11

ELEMENT-IMAGE-ARRAY GENERATING UNIT 〜13

DISPLAY CONTROLLING UNIT 〜14

DISPLAYING UNIT ⌐3

FIG.10

FIG.11

FIG.12

35    34

Ls1

3 4 5 6 7 8 9 10 11

Vs

FIG.13

-11-10 -9 -8 -7 -6 -5 -4 -3 -2 -1 0 1 2 3 4 5 6 7 8 9 10 11

# FIG.14

Vs

-11 -10 -9 -8 -7 -6 -5 -4 -3 -2 -1 0 1 2 3 4 5 6 7 8 9 10 11

# FIG.15

Vs

-4 -3 -2 -1 0 1 2 3 4

# FIG.16

# FIG.17

# FIG.18A

START

MULTI-VIEWPOINT INFORMATION IS INPUT ~S11

IS IMAGE OBTAINING POSITION INFORMATION CONTAINED? ⌐S12 — NO → (A)

↓YES

SPECIFY Lc CONTAINED IN IMAGE OBTAINING POSITION INFORMATION AS Ls2 ~S13

PERFORM VIEWING AREA OPTIMIZATION PROCESS AT Ls1 (Ls1≦Ls2) ~S14

SPECIFY IMAGE OBTAINING POSITIONS (VIEWPOINT NUMBERS) ON Ls2 PLANE BASED ON INTER-OPTICAL-BEAM DISTANCE x ~S15

(B)

CALCULATE INCIDENT POSITIONS IN WHICH DISPLAY-PURPOSE OPTICAL BEAMS EMITTED FROM SUB-PIXELS TO WHICH VIEWING AREA OPTIMIZATION PROCESS HAS BEEN APPLIED BECOME INCIDENT ON Ls2 PLANE ~S16

IDENTIFY IMAGE OBTAINING POSITIONS (VIEWPOINT NUMBERS) POSITIONED CLOSEST TO INCIDENT POSITIONS RESPECTIVELY ~S17

GENERATE ELEMENT IMAGE ARRAY BY ASSIGNING PARALLAX IMAGES EXTRACTED FROM MULTI-VIEWPOINT IMAGES CORRESPONDING TO VIEWPOINT NUMBERS TO SUB-PIXELS FROM WHICH DISPLAY-PURPOSE OPTICAL BEAMS CORRESPONDING TO INCIDENT POSITIONS ARE EMITTED ~S18

DISPLAY ELEMENT IMAGE ARRAY ON DISPLAYING UNIT (FPD) ~S26

HAS INSTRUCTION INDICATING THAT INTER-OPTICAL-BEAM DISTANCE x SHOULD BE CHANGED BEEN RECEIVED? ⌐S27 — YES

↓NO

HAS INSTRUCTION INDICATING THAT Ls2 SHOULD BE CHANGED BEEN RECEIVED? ⌐S28 — YES

↓NO

HAS INSTRUCTION INDICATING THAT Ls1 SHOULD BE CHANGED BEEN RECEIVED? ⌐S29 — YES

↓NO

END

# FIG.18B

(A)

↓

PERFORM VIEWING AREA OPTIMIZATION PROCESS AT Ls1 — S19

↓

HYPOTHETICALLY SPECIFY (Ls1≦Ls2 ) — S20

↓

SPECIFY IMAGE OBTAINING POSITIONS (VIEWPOINT NUMBERS) ON Ls2 PLANE, BASED ON INTER-OPTICAL-BEAM DISTANCE x — S21

↓

CALCULATE INCIDENT RANGE WITHIN WHICH DISPLAY-PURPOSE OPTICAL BEAMS EMITTED FROM SUB-PIXELS TO WHICH VIEWING AREA OPTIMIZATION PROCESS HAS BEEN APPLIED BECOME INCIDENT ON Ls2 PLANE — S22

↓

CALCULATE RANGE OF IMAGE OBTAINING POSITIONS (OBTAINING RANGE) ON Ls2 PLANE, BASED ON TOTAL NUMBER OF VIEWPOINTS CONTAINED IN MULTI-VIEWPOINT INFORMATION — S23

↓

S24
DOES WIDTH OF INCIDENT RANGE SUBSTANTIALLY MATCH WIDTH OF OBTAINING RANGE? — NO

↓ YES

SPECIFY CURRENT Ls2 AS ACTUAL Ls2 VALUE — S25

↓

(B)

# FIG.19

# FIG.20

**EP 2 040 478 A2**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007245258 A
- JP H099143 A
- JP 2005331844 A

**Non-patent literature cited in the description**

- **MASAYUKI TANIMOTO.** FTV [Free Viewpoint Television]: Opening a New Paradigm of Visual Systems, Journal of The Institute of Electronics. *Information and Communication Engineers,* 2006, vol. 89 (10), 866